(19) **Europäisches Patentamt** / **European Patent Office** / **Office européen des brevets**

(11) **EP 4 764 623 A1**

(12) **EUROPEAN PATENT APPLICATION**

(43) Date of publication:
24.06.2026  Bulletin 2026/26

(21) Application number: 24307157.8

(22) Date of filing: 18.12.2024

(51) International Patent Classification (IPC):
**G02B 1/115** (2015.01)

(52) Cooperative Patent Classification (CPC):
**G02B 1/115**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Essilor International**
**94220 Charenton-Le-Pont (FR)**

(72) Inventors:
• DING, Xingzhao
  120425 Singapore (SG)
• PELAYO, Andrew
  339346 Singapore (SG)
• MAURY, Hélène
  75011 PARIS (FR)

(74) Representative: **Jacobacci & Partners France**
**32, rue de l'Arcade**
**75008 Paris (FR)**

(54) **OPTICAL ARTICLE HAVING AN AMORPHOUS SILICON LAYER FOR PROTECTION FROM HARMFUL BLUE LIGHT**

(57)     The invention relates to an optical article comprising a substrate having a front main face and a rear main face, at least one main face of which having a multilayer antireflection coating comprising at least one low refractive index layer having a refractive index of 1.55 or less, the refractive indexes being expressed at a wavelength of 550 nm, and at least one layer of amorphous silicon, and wherein said multilayer antireflection coating provides the optical article with the following property: the mean light reflection factor Rv on said at least one main face between 380 nm and 780 nm, defined in the ISO 13666:1998 standard, is lower than or equal to 0.9 %, for an angle of incidence ranging from 0° to 15°.

Processed by Luminess, 75001 PARIS (FR)

**Description**

The present invention relates to an optical article, in particular an ophthalmic lens, comprising a substrate coated with a highly transparent multilayer antireflection coating, which can be used to filter blue light by absorption, or by absorption and reflection, and reduce the blue light-induced phototoxic effects on the retina of a spectacle wearer.

Light that is visible to humans extends over a light spectrum ranging from a 380 nanometers (nm) wavelength to a 780 nm wavelength approximately. The part of this spectrum ranging from around 380 nm to around 500 nm corresponds to a high-energy, essentially blue light.

Many studies (see for example Kitchel E., "The effects of blue light on ocular health", Journal of Visual Impairment and Blindness Vol. 94, No. 6, 2000 or Glazer-Hockstein et al., Retina, Vol. 26, No. 1. p. 1-4, 2006) suggest that part of the blue light has phototoxic effects on the human eye health, and especially on the retina. Ocular photobiology studies demonstrated that an excessively prolonged or intense exposure to blue light may induce severe ophthalmic diseases such as age-related macular degeneration (ARMD) or cataract.

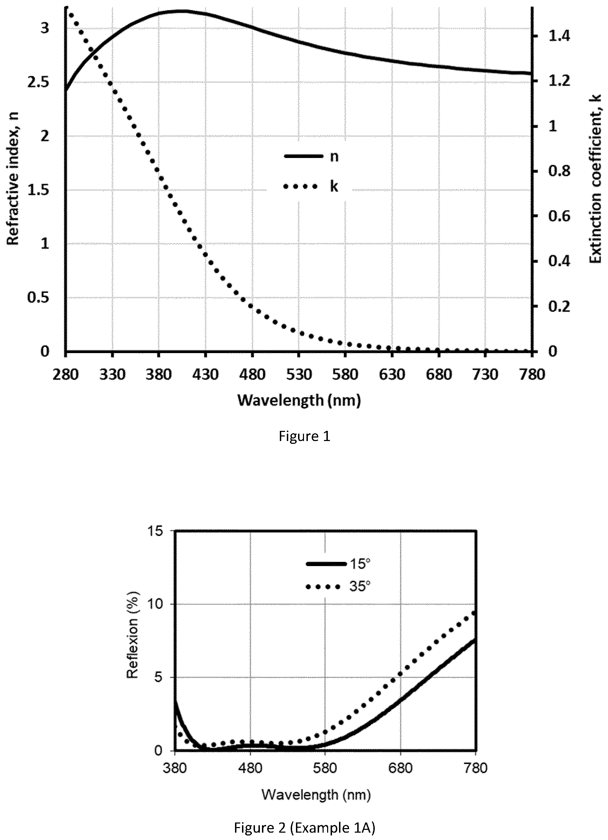

ISO 8980-3 standard (2003) defines at Table B.1 the blue light hazard function $B(\lambda)$, which relates to the sensitivity of the human eye to low wavelength spectrum emissions. In view of this function shown on figure 2, it is recommended to limit the exposure of the eyes to blue light potentially harmful, in particular as regards the wavelength band with an increased dangerousness (420-455 nm).

Nowadays, with increasing usage of digital devices such as digital screens of computers and smartphones, visual fatigue and discomfort have become much more frequent. Beyond its cumulative effects on visual health, several studies suggest blue light exposure increases glare and visual discomfort. Filtering blue light may notably improve visual function in high glare situations.

Indeed, repeated exposures to artificial light, especially with blue light-emitting digital devices, has been identified as a cause of eyestrain and blurry vision, and contributes to symptoms of visual fatigue, discomfort and haze, since blue light is scattered in the environment and in the eye more than any other kind of visible light, increasing the effort needed to maintain visual focus. This is due to the fact that blue wavelengths of light are shorter wavelengths that are absorbed and scattered more efficiently than longer wavelengths by small particles. According to the Rayleigh scattering theory, the amount of scattering is inversely proportional to the fourth power of the wavelength. Other symptoms include ocular pain, red, dry or irritated eyes, headache, eye heaviness and tiredness, transient or persistent discomfort dependent on the duration of blue light exposure.

There is a growing demand for combining protection against blue-violet light, mainly from daylight, and visual comfort resulting from protection against eye-demanding LED blue light emission from digital devices. A typical emission spectrum of standard cold LED from a digital device (tablet) shows a sharp emission peak around 450 nm.

However, part of the blue light, with a wavelength ranging from 465 nm to 495 nm approximately, is good for health since it is implicated in mechanisms for regulating biorhythms, referred to as "circadian cycles".

It is furthermore necessary to eliminate as much as possible the harmful influence of ultraviolet light (UV light) on the eye of a user. Ultraviolet (UV) light is the portion of the luminous spectrum ranging from 100 to 380 nm. Amongst the UV bands reaching the earth surface, the UVA band, ranging from 315 nm to 380 nm, and the UVB band, ranging from 280 nm to 315 nm, are particularly harmful to the retina.

Further, it is recommended to limit exposure of the eyes to harmful near infrared light (NIR), which covers the wavelength range from 780 to 1400 nm. Acute NIR exposure is well known to lead to cataract, and recent investigations showed strong presumption that cataract can also be triggered upon chronic NIR exposure.

To alleviate such damages, it has been suggested to cut at least partially UV light, NIR light and/or the troublesome part of the blue light spectrum from 400 nm to 460 nm. For example, in the patent application WO 2008/024414, lenses comprise a film partially inhibiting blue light through absorption by means of a blue light absorbing dye or through reflection.

WO 2013/171434 discloses an ophthalmic lens having a front main face and a back main face, at least one of both main faces comprising a filter, which provides the main face comprising said filter with a good angular selectivity defined by a parameter $\Delta(\theta,\theta')$, an average blue light reflection factor $R_m^{B1}$ within a wavelength range of from 420 nm to 450 nm, which is higher than or equal to 5%, for an angle of incidence ranging from 0° to 15°, and a spectral reflectivity curve for an angle of incidence ranging from 0° to 15°, this reflectivity curve having a maximum reflectivity at a wavelength of less than 435 nm and full width at half maximum (FWHM) higher than or equal to 80 nm. The coatings disclosed in this application are purely reflecting coatings optimized to provide protection from blue-violet light up to 450 nm by reflection, but they cannot provide sufficient protection against LED blue light emission from digital devices, and their transmission in the other wavelengths of the visible range is not optimal.

However, lenses with high blue-light reflection coatings such as those of WO 2013/171434 inevitably result in strong annoying reflection color, due to their high reflection chroma. Aesthetics still need to be improved. Moreover, the high blue light reflection coatings are only suitable for the convex surface of the lens.

Another solution is to incorporate blue absorption components into the substrate of the optical article or a hard coat. However, blue light absorption by this technical solution is limited up to 410-420 nm, with very low protection in the range from 420 to 460 nm.

In order to adapt to the behavioral changes of the past 10 years and increasing digital usages, new filtering optical articles are required, which would enable to minimize the amount of harmful blue light received by the retina, for long-term retinal protection, and also for better comfort.

JP 2010-210945 discloses a base film coated with an 8-layer antireflection film formed by alternately laminating a low refractive index layer and a high refractive index layer, for application on display screens. The first, third, fifth and eighth layers are low refractive index layers, and the second fourth and sixth layers are high refractive index layers, while the seventh layer is an amorphous silicon layer having a thickness of 1-10 nm and a refractive index of 1.7 or more at a wavelength of 550 nm. The amorphous silicon layer is used as an antistatic layer and does not impair the transparency of the film, which is not employed for cutting UV, NIR or blue light.

JP 2010-237639 discloses a glass substrate coated with a 61-layer film formed by alternately laminating a low refractive index layer and a high refractive index layer, and a 1-10 nm thick amorphous silicon layer is stacked between the thirteenth low refractive index layer and the thirteenth high refractive index layer. The amorphous silicon layer is used as an antistatic layer and does not impair the transparency of the film, which is used as an UV-IR cut film or an IR cut film.

JP 2010-140008 discloses an eyeglass lens comprising a lens base material and an antireflective film constituted of four low refractive index layers, three high refractive index layers and a 1-10 nm thick amorphous silicon layer, used as an antistatic layer and that does not impair the transparency of the film.

The main objective of the present invention to provide an optical article providing a high level of protection against harmful blue light, and optionally UV light or near infrared light, a better comfort for the wearer and exhibiting a final color that is well accepted by the customer, in particular having a weaker residual reflection color, which is beneficial for improving product aesthetics. Such an article should also have a high antireflection performance in the visible range while keeping a good transparency (i.e., a high level of transmission in the visible range).

It is an object of the present invention to provide an optical article, bringing visual benefit in front of LED screens. Such an article would take the whole light irradiation originating from the surrounding area into account and comprise means capable of reducing the amount of blue light emitted by LED digital devices received by the eye in the wavelength range of from 440 nm to 460 nm, considering the fact that most commercial optical articles cut less than 10 % of light in this wavelength range, which is not enough to substantiate increased visual comfort.

It is another object of the present invention to provide an optical article, which enables a good transmission within the wavelength range of from 465 nm to 495 nm, and more generally, wavelengths higher than 465 nm, so as to maintain a good vision for the wearer on one hand, and on the other hand, not to alter the circadian cycles. The difficulty lies in the fact that the wavelength ranges of from 420 nm to 460 nm to be filtered are very close to the wavelength ranges which should not be, or very little, filtered.

It is another object of the present invention to provide an optical article comprising a filter with the hereabove mentioned properties, which would be easy and economical to implement on the industrial level. Its manufacturing process should be easily integrated into the classical manufacturing chain. The inventors found that these objectives could be achieved by a coating that is antireflective in the visible range and absorbs blue light due to the presence of a thin amorphous silicon layer, thus reducing the amount of blue light received by the eye in the wavelength range of from 420 nm to 460 nm. In some embodiments, this coating can also act as a blue light reflection filter, a near infrared light reflection filter, or display low UV reflection function.

Thus, the present invention relates to an optical article comprising a substrate having a front main face and a rear main face, at least one main face of which having a multilayer antireflection coating comprising at least one low refractive index layer having a refractive index of 1.55 or less, the refractive indexes being expressed at a wavelength of 550 nm, and at least one layer of amorphous silicon, and wherein said multilayer antireflection coating provides the optical article with the following property: the mean light reflection factor Rv on said at least one main face between 380 nm and 780 nm, defined in the ISO 13666:1998 standard, is lower than or equal to 0.9 %, for an angle of incidence ranging from 0° to 15°.

The present invention provides new filtering antireflection coatings designed to provide more effective protection against harmful blue light from 400 to 460 nm, while improving aesthetics, due to low level of $R_m^{B1}$, increasing visual comfort and decreasing eyestrain favored by a prolonged usage of LED-based digital devices. They have a good antireflection efficiency, i.e., a low mean light reflection factors $R_v$, which ensures high clarity of the resulting coated lenses, generally combined with an improved blue light cutting efficiency in the 440-460 nm wavelength range (LED light region), an improved blue light cutting efficiency in the 420-450 nm wavelength range, and generally a satisfactory transmission of chronobiologic blue light in the 465-495 nm wavelength range.

Including a blue light absorbing layer in the antireflection stack is a new lever to improve both blue light cutting and aesthetics of the optical article.

The foregoing and other objects, features and advantages of the present invention will become readily apparent to those skilled in the art from a reading of the detailed description hereafter when considered in conjunction with the accompanying drawing, wherein figure 1 depicts the refractive index (n) and extinction coefficient (k) of an amorphous silicon monolayer deposited by e-beam evaporation, as a function of the wavelength.

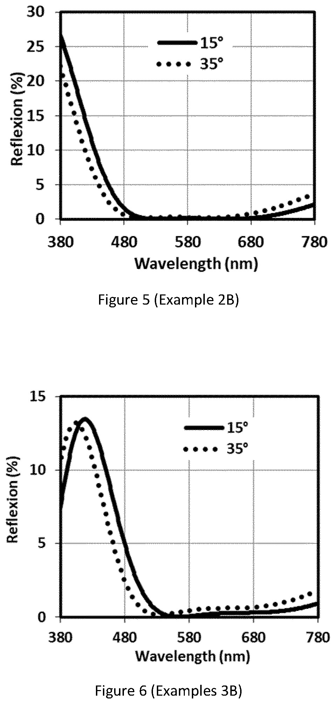

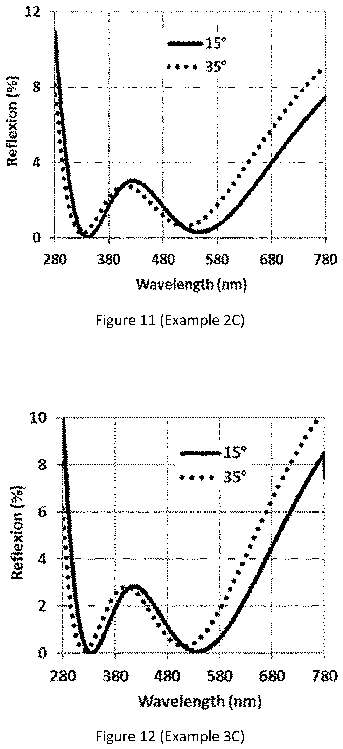

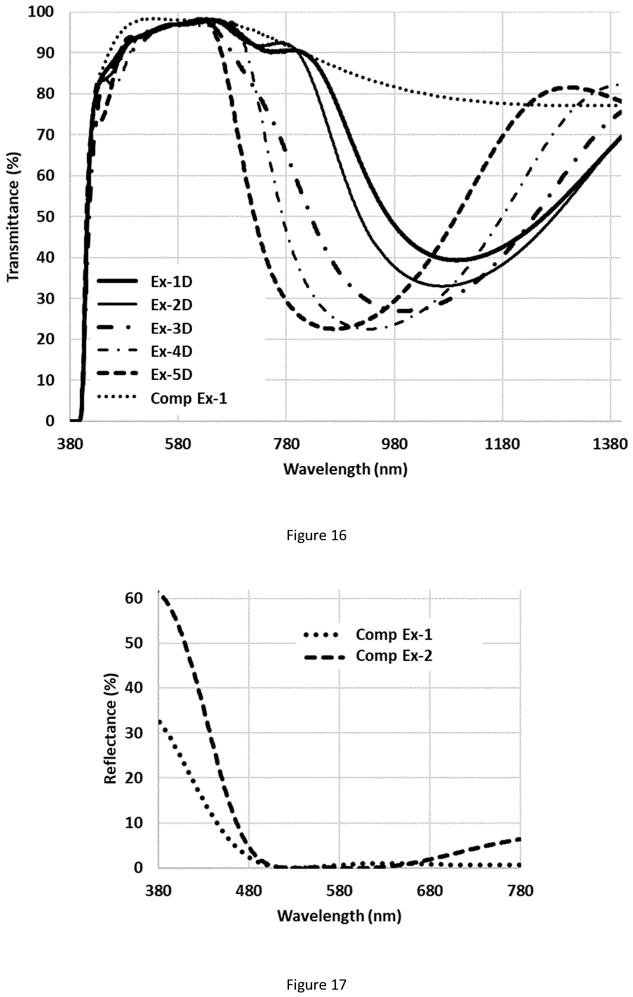

Figures 2-16 represent reflection and transmission spectra of lenses provided with coatings according to the invention and figure 17 of comparative coatings.

Detailed description of the invention

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about".

When an optical article comprises one or more surface coatings, the phrase "to deposit a coating or layer onto the optical article" means that a coating or layer is deposited onto the outermost coating of the optical article, i.e., the coating which is the closest to the air.

In the present application, a coating that is "on" a substrate/coating or which has been deposited "onto" a substrate/coating is defined as a coating that (i) is positioned above the substrate/coating, (ii) is not necessarily in contact with the substrate/coating, that is to say one or more intermediate coatings may be arranged between the substrate/coating and the coating in question (however, it is preferably in contact with said substrate/coating), and (iii) does not necessarily completely cover the substrate/coating. When "a layer 1 is arranged under a layer 2", it is intended to mean that layer 2 is more distant from the substrate than layer 1.

The term "coating" is understood to mean any layer, layer stack or film, which may be in contact with the substrate and/or with another coating, for example a sol-gel coating or a coating made of an organic resin. A coating may be deposited or formed through various methods, including wet processing, gaseous processing, and film transfer.

In the present application, a layer based on a material is defined as a layer comprising at least 80 % by weight of said material, more preferably at least 90 % by weight of said material, even better consisting of a layer of said material. For example, a $ZrO_2$-based layer comprises at least 80 % by weight of ZrOz.

The optical article prepared according to the present invention is a transparent optical article, preferably an optical lens or lens blank, and more preferably an ophthalmic lens or lens blank. Said ophthalmic lens may be a polarized lens, or a solar, tinted lens, with a corrective action or not.

The optical article may be coated on its convex main face (front side), concave main face (back/rear side), or both faces with the multilayer antireflection coating according to the invention, preferably on the convex (front) main face, so as to avoid multiple reflections of light arriving on the lens. As used herein, the rear face of the substrate is intended to mean the face which, when using the article, is the nearest to the wearer's eye, in the cases of ophthalmic lenses. It is generally a concave face. On the contrary, the front face of the substrate is the face which, when using the article, is the most distant from the wearer's eye. It is generally a convex face. The optical article can also be a plano article.

In an embodiment, the optical article according to the invention is coated on both faces (front and rear main faces) with antireflection coatings according to the invention. The coatings may be identical or different.

In another embodiment, the main face coated with the filter according to the invention is the front main face of the article and the back main face is coated with a traditional antireflection coating or preferably an antireflection coating with a low reflection in the UV region, such as those described in WO 2012/076714 or a filter according to the invention having a low reflection in the UV region.

In still another embodiment, the back main face of the optical article is coated with a filter according to the invention having a low reflection in the UV region, and the front main face is coated with another antireflection coating.

Herein, the term "lens" means an organic or inorganic glass lens, comprising a lens substrate, which may be coated with one or more coatings of various natures.

The term "ophthalmic lens" is used to mean a lens adapted to a spectacle frame, for example to protect the eye and/or correct the sight. Said lens can be chosen from afocal, unifocal, bifocal, trifocal and progressive lenses. Although ophthalmic optics is a preferred field of the invention, it will be understood that this invention can be applied to optical articles of other types, such as, for example, lenses for optical instruments, in photography or astronomy, optical sighting lenses, ocular visors, optics of lighting systems, etc.

In the present description, unless otherwise specified, an optical article/material is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description, unless otherwise specified.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical article and more particularly of the ophthalmic or optical lens. This material acts as support for a stack of one or more coatings or layers.

The substrate may be made of mineral glass or organic glass, preferably organic glass. The organic glasses can be either thermoplastic materials such as polycarbonates and thermoplastic polyurethanes or thermosetting (cross-linked) materials such as diethylene glycol bis(allylcarbonate) polymers and copolymers (in particular CR-39® from PPG Industries), thermosetting polyurethanes, polythiourethanes, preferably polythiourethane resins having a refractive index of 1.60 or 1.67, polyepoxides, polyepisulfides, such as those having a refractive index of 1.74, poly(meth)acrylates and copolymers based substrates, such as substrates comprising (meth)acrylic polymers and copolymers derived from bisphenol-A, polythio(meth)acrylates, as well as copolymers thereof and blends thereof. Preferred materials for the optical article substrate are polycarbonates (PC), diethylene glycol bis(allylcarbonate) polymers and substrates obtained from thermosetting polythiourethane resins, which are marketed by the Mitsui Toatsu Chemicals company as MR series, in particular MR6®, MR7® and MR8® resins. The latter substrates as well as the monomers used for their preparation are especially described in the patents US 4,689,387, US 4,775,733, US 5,059,673, US 5,087,758 and US 5,191,055.

Prior to depositing the antireflection coating or other functional coatings, the surface of the article is usually submitted to a physical or chemical surface activating and cleaning pre-treatment, so as to improve the adhesion of the layer to be deposited, such as disclosed in WO 2013/013929. This pre-treatment is generally performed on the surface of an abrasion- and/or scratch-resistant coating (hard coat).

This pre-treatment is generally carried out under vacuum. It may be a bombardment with energetic species, for example an ion beam method ("Ion Pre-Cleaning" or "IPC") or an electron beam method, a corona treatment, an ion spallation treatment, an ultraviolet treatment or a plasma treatment under vacuum, using typically an oxygen or an argon plasma. It may also be an acid or a base surface treatment and/or a solvent surface treatment (using water or an organic solvent) with or without ultrasonic treatment. Many treatments may be combined. Thanks to these cleaning treatments, the cleanliness of the substrate surface is optimized.

By energetic species, it is meant species with an energy ranging from 1 to 300 eV, preferably from 1 to 150 eV, and more preferably from 10 to 150 eV and most preferably from 40 to 150 eV. Energetic species may be chemical species such as ions, radicals, or species such as photons or electrons.

The optical properties of the antireflection coating according to the invention, such as for example reflectivity, result from interferences due to the multiple reflections at the air / layer and substrate / layer interfaces.

The antireflection coating present on at least one main face of the substrate of the optical article may be designed as any antireflection coating conventionally used in the field of optics, in particular ophthalmic optics, but contains at least one layer of amorphous silicon, and at least one low refractive index layer having a refractive index of 1.55 or less.

An antireflection coating is a coating, deposited on the surface of an article, which improves the antireflection properties of the final article. It reduces the reflection of light at the article/air interface over a relatively broad portion of the visible spectrum.

The present antireflection coating is configured to selectively inhibit transmission of at least part of blue light in a narrow range of wavelengths, by absorption. Thus, it represents a "blue cut filter" and is useful for protection purposes. By selective reflection of light in a narrow range of wavelengths, potentially harmful light will not reach the eyes of a wearer. This is particularly the case for blue light in the range 420 nm - 450 nm, and/or in the range 440 nm - 460 nm, which are harmful for retina.

The multilayer antireflection coating of the invention comprises a stack of at least one high refractive index layer having a refractive index higher than 1.55 and at least one low refractive index layer having a refractive index of 1.55 or less.

More preferably, it comprises at least two layers (LI) with a low refractive index and at least two layers (HI) with a high refractive index. It preferably comprises at least three layers (HI) with a high refractive index. The total number of layers in the antireflection coating is preferably higher than or equal to 3, more preferably higher than or equal to 4, 5 or 6. It is preferably lower than or equal to 11, 10, 8 or 7, more preferably lower than or equal to 6 or 5. In one embodiment, it ranges from 3 to 7.

As used herein, a layer of the antireflection coating is defined as having a thickness higher than or equal to 1 nm. Thus, any layer having a thickness lower than 1 nm will not be considered when counting the number of layers in the antireflection coating. The optional sub-layer and impedance layers either are not considered when counting the number of layers of the antireflection coating or when indicating its thickness.

HI layers and LI layers do not necessarily alternate with each other in the stack, although they also may, according to one embodiment of the invention. Two HI layers (or more) may be deposited onto each other, as well as two LI layers (or more) may be deposited onto each other.

In the present application, a layer of the antireflection coating is said to be a layer with a high refractive index (HI) when its refractive index is higher than 1.55, preferably higher than or equal to 1.6, even more preferably higher than or equal to 1.8 or 1.9 and most preferably higher than or equal to 2. Said HI layers preferably have a refractive index lower than or equal to 2.5. A layer of an antireflection coating is said to be a low refractive index layer (LI) when its refractive index is lower than or equal to 1.55, preferably lower than or equal to 1.52, more preferably lower than or equal to 1.48 or 1.47. Said LI layer preferably has a refractive index higher than or equal to 1.1.

The HI layer generally comprises one or more metal oxides such as, without limitation, zirconia ($ZrO_2$), titanium oxide such as titanium dioxide ($TiO_2$), alumina ($Al_2O_3$), tantalum pentoxide ($Ta_2O_5$), neodymium oxide ($Nd_2O_5$), praseodymium oxide ($Pr_2O_3$), praseodymium titanate ($PrTiO_3$), $La_2O_3$, $Nb_2O_5$, $Y_2O_3$, amorphous silicon.

Optionally, the HI layers may further contain silica or other materials with a low refractive index, provided they have a refractive index higher than 1.55 as indicated hereabove. The preferred materials include $ZrO_2$, PrTiOs, $Nb_2O_5$, $Ta_2O_5$, $Y_2O_3$, amorphous silicon and mixtures thereof.

The LI layer is also well known and may comprise, without limitation, $SiO_2$, $MgF_2$, $ZrF_4$, $AlF_3$, $Na_5Al_3F_{14}$, $Na_3$ $[AlF_6]$, or a mixture of silica and alumina, especially silica doped with alumina, the latter contributing to increase the antireflection coating thermal resistance. The LI layer is preferably a layer comprising at least 80 % by weight of silica, more preferably at least 90 % by weight of silica, relative to the layer total weight, and even more preferably consists in a silica layer.

Optionally, the LI layers may further contain materials with a high refractive index, provided that the refractive index of the resulting layer is lower than or equal to 1.55.

The antireflection coating external (outermost) layer, i.e., its layer that is the furthest from the substrate, is generally a low refractive index layer having a refractive index of 1.55 or less and a thickness preferably higher than or equal to 65 nm, more preferably higher than or equal to 70, 75, 80, 85, 90, 95, 100 or 105 nm. It may be a silica-based layer, comprising at least 80 % by weight of silica, more preferably at least 90 % by weight of silica (for example a silica layer doped with alumina), relative to the layer total weight, and even more preferably consists of a silica layer.

The antireflection coating innermost layer, i.e., its layer that is in direct contact with the sub-layer (when present) or the substrate, is preferably a high refractive index layer.

Generally, the HI and/or LI layers have a physical thickness ranging from 5 to 120 nm, preferably from 20 to 110 nm. Their thickness may vary to a large extent, depending for instance on the desired properties for the layer, on the layer material, on the deposition technique and/or on the layer position in the stack.

Generally, the total thickness of the antireflection coating is lower than or equal to 1 $\mu$m, preferably lower than or equal to 800 nm, more preferably lower than or equal to 700 nm and even more preferably lower than or equal to 600 or 500 nm. The antireflection coating total thickness is generally higher than or equal to 100 nm, preferably higher than or equal to 150 or 200 nm.

The antireflection coating according to the invention comprises at least one layer of amorphous silicon. It may comprise one layer of amorphous silicon or several layers of amorphous silicon of identical or different thickness, generally 1 to 3 layers of amorphous silicon, preferably 1 or 2.

By amorphous silicon layer, it is meant herein a layer containing more than 90 % by weight of amorphous silicon relative to the total weight of the layer, more preferably 95 wt. % or more and ideally 99 wt. % or more. According to one embodiment, the amorphous silicon layer consists of amorphous silicon.

Within the context of the invention, the amorphous silicon layer is a high refractive index layer since its refractive index is higher than 1.55, namely 2.6 - 2.9 at 550 nm depending on deposition conditions and deposition apparatus.

Figure 1 shows that this material has a strong absorption (high extinction coefficient) in ultraviolet and high energy blue light regions, while the absorption in other visible light regions is very low.

The extinction coefficient (also known as attenuation coefficient) of a particular substance, denoted k, measures the loss in energy of electromagnetic radiation traversing this medium. This is the imaginary part of the complex refractive index. Generally, the amorphous silicon layer according to the invention has an extinction coefficient k which depends on the deposition conditions and deposition apparatus.

Such extinction coefficient at 550 nm is generally less than or equal to 0.2, preferably less than or equal to 0.1, more preferably less than or equal to 0.08, even better less than or equal to 0.06. Preferably, the amorphous silicon layer according to the invention has an extinction coefficient k at 430 nm lower than or equal to 0.75 but depending on the deposition conditions, it can range from 0.35 to 0.45. The extinction coefficient k at 480 nm is generally lower than 0.6 but depending on deposition conditions can range from 0.18 to 0.21, indicating a high blue light absorption. This layer also contributes to absorbing harmful UV light having a wavelength ranging from 280 nm to 380 nm.

The amorphous silicon layer can be used in the antireflection coating for replacing conventional high refractive index layers, e.g., for obtaining a better performing blue light cutting coating. This layer may be located in various places in the antireflection coating. In one embodiment, said layer is the penultimate layer of the antireflection coating, in the stacking order. In another embodiment, said layer is the first layer of the antireflection coating, in the stacking order. Preferably, the outermost (external) layer of the antireflection coating, i.e., the layer of the antireflection coating furthest from the substrate in the stacking order is not an amorphous silicon layer.

The amorphous silicon layer can be interleaved between two high refractive index layers or between two low refractive index layers. In one embodiment, it is interleaved between one high refractive index layer and one low refractive index layer.

The amorphous silicon layer preferably has a thickness ranging from 3 nm to 25 nm, more preferably from 4 nm to 20 nm or 5 nm to 16 nm. Its thickness is preferably higher than 10 nm or 11 nm. When several layers of amorphous silicon layers are present in the antireflection coating, the sum of the thicknesses of the amorphous silicon layers preferably ranges from 3 nm to 25 nm, more preferably from 4 nm to 20 nm or 5 nm to 16 nm. Their total thickness is preferably higher than 10 nm or 11 nm.

Generally, increasing the total thickness of amorphous silicon layers in the stack increases protection from blue light while slightly decreases visible light transmittance (Tv) of the resulting optical article.

The amorphous silicon layer is deposited either with or without treatment by activated species, in particular with or without ion assistance. If an amorphous silicon layer is deposited with ion bombardment, both n and k will be increased. The absorption in both blue light region and other visible light regions will be increased. It is preferably deposited by vacuum evaporation.

The present antireflection coating is a filter for at least part of blue light. It exhibits a high blue cut efficiency resulting from blue light absorption of amorphous silicon material in the antireflection coating. Thus, an optical article of the invention, provided with this filter, reduces the phototoxic blue light global transmission to the retina of a user wearing such an optical article by at least partially blocking its transmission.

In a first main embodiment of the invention, the optical article provides blue light absorption efficiency combined with a low reflection of visible light in particular in the blue light range (420-495 nm), in addition to improved aesthetics.

In this embodiment of the invention, the multilayer antireflection coating provides the optical article with the following properties:

- the average blue light reflection factor on said at least one main face $R_m^{B1}$ within a wavelength range of from 420 nm to 450 nm is lower than or equal to 4 %, for an angle of incidence on the main face comprising said coating ranging from 0° to 15°,
- the average blue light reflection factor on said at least one main face $R_m^{B2}$ within a wavelength range of from 465 nm to 495 nm is lower than or equal to 2 %, for an angle of incidence on the main face comprising said coating ranging from 0° to 15°,
- the average blue light reflection factor on said at least one main face $R_m^{B3}$ within a wavelength range of from 440 nm to 460 nm is lower than or equal to 3 %, for an angle of incidence on the main face comprising said coating ranging from 0° to 15°.

The antireflection coating of this embodiment shows high blue cut efficiency due to the blue absorption material in the coating, but its blue light reflection is very low. Moreover, the reflection chroma and blue light reflection of this antireflection coating is much lower than that of existing blue light protecting products, which is favorable for minimizing the strength of annoying reflection color of the coating and can effectively improve the aesthetic appearance of the as-coated optical article.

$R_m^{B1}$ is defined by the formula:

$$R_m^{B1} = \frac{\int_{420}^{450} R(\lambda)d\lambda}{450-420}$$

wherein $R(\lambda)$ represents the reflection factor at a given wavelength $\lambda$. $R_m^{B1}$ is defined for a specific angle of incidence, preferably 15°, based on $R(\lambda)$ measured at the same angle of incidence.

In this embodiment, the mean reflection factor $R_m^{B1}$ is preferably lower than or equal to any one of the following values: 3.5, 3, 2.5, 2, 1.5, 1, 0.5, 0.3, 0.2 %. It preferably ranges from 0.05 to 3.5 %.

It is considered herein that the major part of the direct light originating from the front of a lens wearer and reaching the retina of the same has a low incidence on the front main face, generally ranging from 0° to 15°. The preferred angle of incidence for each optical parameter is 15° in reflection.

A study conducted to analyze the incidence range of light in typical screen usage situations on ophthalmic lens wearers revealed that 68 % of the light emitted from screen/digital devices reaches the lens in the incident angular range [10°-30°], and 95 % of the light comes at an incidence below 36°. Therefore, the 15° incident angle is a relevant incidence to consider for light emitted by screen devices. The angle of incidence is classically defined as the angle between the perpendicular to the surface at the point of incidence and the direction of the light beam striking this surface.

In this embodiment of the invention, the antireflection coating according to the invention has a limited reflection of the part of blue light known as chronobiologic blue light responsible for the synchronization of the biological clock (in the range of 465 nm to 495 nm), so as to allow a sufficient amount of this light to reach the eyes of the wearer and not to disturb their circadian rhythm.

It may be particularly desirable in some cases to selectively filter a relatively small portion of the blue light spectrum, i.e., within the 380-450 nm region, preferably the 420 nm - 450 nm or 420 nm - 460 nm region, while preserving the ability to transmit neighboring wavelengths. Indeed, it has been found that blocking too much of the blue spectrum can interfere with scotopic vision and mechanisms for regulating biorhythms, referred to as "circadian cycles". Thus, in a preferred embodiment, the antireflection coating blocks less than 10 % or 5 % of light having a wavelength ranging from 465 to 495 nm. In this embodiment, the antireflection coating selectively blocks the phototoxic blue light and efficiently transmits the blue light implicated in circadian rhythms. Preferably, the antireflection coating transmits at least 80, 85 or 90 % of light having a wavelength ranging from 465 to 495 nm (for an angle of incidence on the main face ranging from 0° to 15°). In another embodiment, the antireflection coating does not absorb light in the 465-495 nm range. These requirements are also preferably satisfied by the corresponding optical article.

$R_m^{B2}$ mentioned above is defined by the formula:

$$\mathrm{RmB2} = \frac{\int_{465}^{495} R(\lambda)\, d\lambda}{495 - 465}$$

wherein $R(\lambda)$ represents the reflection factor at a given wavelength $\lambda$. $R_m^{B2}$ is defined for a specific angle of incidence, preferably 15°, based on $R(\lambda)$ measured at the same angle of incidence.

The mean reflection factor $R_m^{B2}$ is preferably lower than or equal to any one of the following values: 1.8, 1.5, 1.25, 1, 0.75, 0.5, 0.3, 0.2 %. It preferably ranges from 0.1 to 2 %.

According to this embodiment, the antireflection coating of the invention enables to protect from the phototoxic blue light band, while preserving at best the circadian cycles by not disturbing the chronobiologic blue light band.

$R_m^{B3}$ mentioned above is defined by the formula:

$$R_m^{B3} = \frac{\int_{440}^{460} R(\lambda) d\lambda}{460 - 440}$$

wherein $R(\lambda)$ represents the reflection factor at a given wavelength $\lambda$. $R_m^{B3}$ is defined for a specific angle of incidence, preferably 15°, based on $R(\lambda)$ measured at the same angle of incidence.

In this embodiment, the mean reflection factor $R_m^{B3}$ is preferably lower than or equal to any one of the following values: 2.5, 2, 1.5, 1, 0.75, 0.5, 0.3, 0.2 %. It preferably ranges from 0.05 to 2.5 %.

In a second main embodiment of the invention, the optical article provides blue light absorption efficiency combined with a high reflection of harmful blue light, in addition to improved aesthetics. As a consequence, it exhibits a high blue cut efficiency resulting from both blue light absorption of amorphous silicon material in the antireflection coating and high reflection of harmful blue light due to the interferential effect of said coating.

The reflection chroma of the antireflection coating of this embodiment is lower than that of existing blue light protecting products, which is favorable for minimizing the strength of annoying reflection color of the coating and can effectively improve the aesthetic appearance of the as-coated optical article.

The present antireflection coating is a filter for at least part of blue light, also working by reflection of said light. Thus, an optical article of the invention, provided with this filter, reduces the phototoxic blue light global transmission to the retina of a user wearing such an optical article by at least partially blocking its transmission.

The antireflection coating according to the invention shows a reflection band in the blue-violet range of light, so as to reflect and thus inhibit transmission of high energy visible light and near UV light, and in particular harmful blue light in the range 420-450 nm (preferably 420-460 nm). This is particularly interesting when the coating is positioned on the front face of the optical article.

In this embodiment of the invention, the multilayer antireflection coating provides the optical article with the following properties:

- the average blue light reflection factor on said at least one main face $R_m^{B1}$ within a wavelength range of from 420 nm to 450 nm is higher than or equal to 8 %, for an angle of incidence on the main face comprising said coating ranging from 0° to 15°,
- the average blue light reflection factor on said at least one main face $R_m^{B2}$ within a wavelength range of from 465 nm to 495 nm is lower than or equal to 8 %, for an angle of incidence on the main face comprising said coating ranging from 0° to 15°,

- the average blue light reflection factor on said at least one main face $R_m^{B3}$ within a wavelength range of from 440 nm to 460 nm is higher than or equal to 4 %, for an angle of incidence on the main face comprising said coating ranging from 0° to 15°.

A significant advantage of the present embodiment over the prior art is that no compromise is made between antireflection properties in the visible range and significant reflection of harmful blue light. All requirements (low $R_v$, high $R_m^{B1}$, high $R_m^{B3}$, low $R_m^{B2}$) are simultaneously satisfied by the present multilayer antireflection coating.

The mean reflection factor $R_m^{B1}$ is such as defined above and is preferably higher than or equal to any one of the following values: 9, 10, 11, 12 %. It preferably ranges from 8 to less than 13 %, more preferably 8 to 12.5 %.

In this embodiment, the present filter is especially designed to maximize the average blue light reflection factor $R_m^{B1}$. This makes it possible to maximize the rejection of phototoxic blue light, within the wavelength range of from 420 nm to 450 nm, directly arriving on the front main face of the optical article, by depositing the filter preferably on said front face.

In this embodiment of the invention, the antireflection coating according to the invention has a limited reflection of the part of blue light known as chronobiologic blue light responsible for the synchronization of the biological clock (in the range of 465 nm to 495 nm), so as to allow a sufficient amount of this light to reach the eyes of the wearer and not to disturb their circadian rhythm.

The mean reflection factor $R_m^{B2}$ is such as defined above and is preferably lower than or equal to any one of the following values: 7, 6, 5, 4, 3, 2, 1 %. It preferably ranges from 0.5 to 6 %.

According to this embodiment, the antireflection coating of the invention has an outstanding selectivity, which enables to protect from the phototoxic blue light band, while preserving at best the circadian cycles by not disturbing the chronobiologic blue light band. Preferably, $R_m^{B2}$ is lower than $R_m^{B1}$, more preferably at least twice lower.

The mean reflection factor $R_m^{B3}$ is such as defined above and is preferably higher than or equal to any one of the following values: 5, 6, 7, 8, 9, 10 %. It preferably ranges from 4 to 25 %.

In this embodiment, the antireflection coating according to the invention at least partially reflects LED blue light emitted by digital devices around 450 nm.

In this embodiment, the present filter is especially designed to maximize the average blue light reflection factor $R_m^{B3}$. This makes it possible to maximize the rejection of phototoxic blue light, within the wavelength range of from 440 nm to 460 nm, directly arriving on the front main face of the optical article, by depositing the filter preferably on said front face, and thus to increase visual comfort and decrease eyestrain favored by a prolonged usage of LED-based digital devices.

In one of its aspects, the present invention is aimed at using the optical article of the invention for a therapeutic purpose or to prevent diseases related to blue light-induced phototoxicity (day light and LED light), to reduce the risks of occurrence of an ophthalmic disease due to a degenerative process related to the phototoxic blue light, or to protect against the blue light-induced phototoxicity at least part of the wearer's eye, in particular against a degenerative process such as age-related macular degeneration (ARMD). An optical article such as described herein does also advantageously provide the wearer with an improved visual contrast.

In this embodiment, the average blue light reflection factor $R_m^{B1}$ within a wavelength range of from 420 nm to 450 nm, for an angle of incidence ranging from 0° to 15° (preferably 15°), is preferably higher than the average blue light reflection factor $R_m^{B3}$ within a wavelength range of from 440 nm to 460 nm, for an angle of incidence ranging from 0° to 15° (preferably 15°).

In the present application, the spectral reflectivity of the optical article, for a given angle of incidence of the face comprising the filter, represents the variation of the reflectivity (i.e., reflection factor) at this angle of incidence depending on the wavelength. The reflectivity curve/spectrum does correspond to a schematic illustration of the reflectivity, in which reflectivity is plotted as ordinate and wavelength as abscissa. The reflectivity may be measured by means of a spectrophotometer, for example a spectrophotometer Perkin Elmer Lambda 850 fitted with URA (Universal Reflectance Accessory), which provides a reflection spectrum.

In one embodiment, the spectral reflectivity curve of said multilayer antireflection coating for an angle of incidence ranging from 0° to 15° has a reflection peak centered at a wavelength higher than or equal to 330, 350, 360 or 370 nm and lower than or equal to 420 or 410 nm, more preferably lower than or equal to 400 or 390 nm. Preferably, the spectral reflectivity curve of said multilayer antireflection coating for an angle of incidence ranging from 0° to 15° has a maximum reflectivity at a wavelength higher than or equal to 330, 350, 360 or 370 nm and lower than or equal to 420 or 410 nm, more preferably lower than or equal to 400 or 390 nm. It is thus shifted as compared to the central wavelength (435 nm) of the wavelength band between 420 nm and 450 nm of phototoxic blue light.

As used herein, having a reflection peak in a range of wavelengths means that the maximum of the peak falls within this range.

In a third main embodiment of the invention, the optical article provides blue light absorption efficiency resulting from the presence of amorphous silicon material combined with an improved protection from UV light, in addition to improved aesthetics.

In this embodiment, the antireflection coating further has low reflection of UV radiation and is preferably applied on a concave/rear face of the optical article. The optical article of the invention is configured to reduce reflection in the UVA- and UVB-radiation ranges (respectively 315-380 nm and 280-315 nm) preferably on the rear face, so as to allow the best health protection against UV light.

It is advisable for a spectacle wearer to wear before each of both eyes an ophthalmic lens that strongly reduces reflection on the rear face in the UVA- and UVB-radiation ranges, which are particularly harmful to the retina. Such lenses may also provide increased visual performance due to increased contrast sensitivity.

Reflecting UV light is not really problematic on the front face of the lens, since the major part of the UV radiation which comes from the front of the wearer and might attain the wearer's eye (normal incidence, 0 to 15°) generally gets absorbed by the ophthalmic lens substrate. On the other hand, the UV radiation resulting from light sources located behind the wearer may reflect on the lens rear face and reach the wearer's eye if the lens is not provided with an antireflective coating which is efficient in the ultraviolet region, thus potentially affecting the wearer's health. It is observed that the light rays that may reflect onto the lens rear face and reach the wearer's eye have a narrow incidence angle range, ranging from 30 to 45° (oblique incidence).

In this embodiment of the invention, the multilayer antireflection coating provides the optical article with the following property: the mean reflection factor $R_{uv}$ on said at least one main face between 280 nm and 380 nm, weighted by the function $W(\lambda)$ defined in the ISO 13666:1998 standard, is lower than or equal to 5 %, for an angle of incidence of 35°. The main face is preferably the rear (back) face, which provides flexibility for applying any common antireflection coating on the front main face.

The mean reflection factor $R_{UV}$ on the main face of the substrate is preferably lower than 4 %, more preferably lower than or equal to 3 %, even better lower than or equal to 2 or 1 %, at an angle of incidence of 35°.

Said mean reflection factor Ruv is defined through the following relation:

$$R_{UV} = \frac{\displaystyle\int_{280}^{380} W(\lambda).R(\lambda).d\lambda}{\displaystyle\int_{280}^{380} W(\lambda).d\lambda}$$

wherein $R(\lambda)$ represents the optical article spectral reflection factor at a given wavelength, and $W(\lambda)$ represents a weighting function equal to the product of the solar spectrum irradiance $Es(\lambda)$ and the efficiency relative spectral function $S(\lambda)$.

The spectral function $W(\lambda)$, enabling to calculate the ultraviolet radiation factor Ruv as defined above and transmission factor, TsUVB is defined according to the ISO 13666:1998 standard (TsUVB defined in § 15.3.3 of ISO13666:1998 as referred before). It makes it possible to express the ultraviolet solar radiation distribution tempered by the relative spectral efficiency of such radiation for a user, since it simultaneously takes both the received solar spectral energy $Es(\lambda)$ into account, with less preeminence of UVB-rays as compared to UVA-rays, and the spectral efficiency $S(\lambda)$, UVB-rays being more harmful than UVA-rays. The values for those three functions in the ultraviolet region are given in the table disclosed in ISO 13666:1998 standard (which is reproduced at page 6 of the publication WO 2012/076714).

Ruv is measured in the present application at an angle of incidence of 35°. Calculation examples of Ruv for angles of incidence at 30° and 45° are given in WO 2012/076714. A person skilled in the art can easily implement calculation based on reflection values measured on the respective faces at the desired incidence angle (15°, 35°).

The reflection chroma of the antireflection coating of this embodiment is generally lower than that of existing blue light protecting products, and the blue light reflection of this coating is preferably low, which is favorable for minimizing the strength of annoying reflection color of the coating and can effectively improve the aesthetic appearance of the as-coated optical article.

In this third embodiment of the invention, the multilayer antireflection coating preferably provides the optical article with the following properties:

- the average blue light reflection factor on said at least one main face $R_m^{B1}$ within a wavelength range of from 420 nm to 450 nm is lower than or equal to 5, 4 or 3 %, for an angle of incidence on the main face comprising said coating ranging from 0° to 15°, and/or
- the average blue light reflection factor on said at least one main face $R_m^{B2}$ within a wavelength range of from 465 nm to 495 nm is lower than or equal to 3.5, 2.5 or 2 %, for an angle of incidence on the main face comprising said coating ranging from 0° to 15°, and/or
- the average blue light reflection factor on said at least one main face $R_m^{B3}$ within a wavelength range of from 440 nm to 460 nm is lower than or equal to 5, 4 or 3 %, for an angle of incidence on the main face comprising said coating ranging from 0° to 15°.

The above requirements for $R_m^{B1}$, $R_m^{B2}$, $R_m^{B3}$ are preferably simultaneously satisfied.

In a fourth main embodiment of the invention, the optical article provides blue light absorption efficiency combined with an improved NIR radiation cutting efficiency in the 780-1400 nm wavelength range, in addition to improved aesthetics.

In this embodiment, the antireflection coating further has high reflection of NIR radiation, providing the optical article with protection against NIR light in addition to harmful blue light.

The present antireflection coating is configured to inhibit transmission of at least part of NIR radiation, by reflection. Thus, it represents a "NIR cut filter" and is useful for protection purposes. By reflection of light in the ranges of wavelengths corresponding to the NIR radiation, potentially harmful light will not reach the eyes of a wearer. This is particularly the case for NIR radiation ranging from 780 nm to 1400 nm, this radiation being believed to be harmful for retina.

Thus, an optical article of the invention, provided with this reflection filter, reduces the harmful NIR global transmission to the retina of a user wearing such an optical article by at least partially blocking its transmission.

The antireflection coating according to this embodiment of the invention shows a reflection band in the NIR range. This is particularly interesting when the coating is positioned on the front face of the optical article.

In this embodiment, the multilayer antireflection coating provides the optical article with the following property: the mean reflection factor in the near infrared region $R_m^{NIR}$ on said at least one main face within a wavelength range of from 780 nm to 1400 nm is higher than or equal to 30 %, 35 %, 40 %, 45 % or 50 % for an angle of incidence on said face ranging from 0° (normal incidence) to 15°, preferably 15°, wherein $R_m^{NIR}$ is defined by the following formula in which $R(\lambda)$ represents the reflection factor at wavelength $\lambda$:

$$R_m^{NIR} = \frac{\int_{780}^{1400} R(\lambda)d\lambda}{1400 - 780}$$

$R_m^{NIR}$ is defined for a specific angle of incidence, based on $R(\lambda)$ measured at the same angle of incidence.

In the same manner, it is possible to define $T_m^{NIR}$:

$$T_m{}^{NIR} = \frac{\int_{780}^{1400} T(\lambda)\,d\lambda}{1400 - 780}$$

The present filter is thus especially designed to maximize the average near infrared radiation reflection factor $R_m^{NIR}$. This makes it possible to maximize the rejection of harmful NIR radiation, within the wavelength range of from 780 nm to 1400 nm, directly arriving on the front main face of the optical article, by depositing the filter preferably on said front face. A significant advantage of the present embodiment over the prior art is that no compromise is made between antireflection properties in the visible range and significant reflection of harmful NIR light. All requirements (low $R_v$, high $R_m^{NIR}$) are simultaneously satisfied by the present multilayer antireflection coating.

In some embodiments, the multilayer antireflection coating presents a reflectivity at the wavelength 850 nm higher than or equal to any one of the following values: 60 %, 65 %, 70 %, 75 %.

In some embodiments, the multilayer antireflection coating presents a reflectivity at the wavelength 940 nm higher than or equal to any one of the following values: 60 %, 65 %, 70 %, 75 %.

Coatings with high reflection at 940 nm and/or 850 nm have special application for Smart Anti-Reflective coatings for Digital Devices applications such as described in US 2022/291740 (US 11822709), and US 2022/269111, for example for reading distance control when using digital devices.

The reflection chroma (linked to $R_m^{B1}$ and/or $R_m^{B3}$) of the antireflection coating of this embodiment is generally lower than that of existing blue light protecting products due to lower values of $R_m^{B1}$ and/or $R_m^{B3}$, and the blue light reflection of this coating is preferably low, which is favorable for minimizing the strength of annoying reflection color of the coating and can effectively improve the aesthetic appearance of the as-coated optical article.

In this fourth embodiment of the invention, the multilayer antireflection coating preferably provides the optical article with the following properties:

- the average blue light reflection factor on said at least one main face $R_m^{B1}$ within a wavelength range of from 420 nm to 450 nm is lower than or equal to 10, 8, 5, 3 or 2 %, for an angle of incidence on the main face comprising said coating ranging from 0° to 15°, and/or
- the average blue light reflection factor on said at least one main face $R_m^{B2}$ within a wavelength range of from 465 nm to 495 nm is lower than or equal to 4, 3, 2 or 1 %, for an angle of incidence on the main face comprising said coating ranging from 0° to 15°, and/or
- the average blue light reflection factor on said at least one main face $R_m^{B3}$ within a wavelength range of from 440 nm to 460 nm is lower than or equal to 10, 8, 5, 3 or 2 %, for an angle of incidence on the main face comprising said coating ranging from 0° to 15°.

The above requirements for $R_m^{B1}$, $R_m^{B2}$, $R_m^{B3}$ are preferably simultaneously satisfied.

In the present invention, the multilayer antireflection coating can be deposited onto a monolayer sub-layer having a thickness higher than or equal to 100 nm. It should be noted that such sub-layer does not belong to the antireflection coating. Said sub-layer is preferably in direct contact with the antireflection coating.

As used herein, an antireflection coating sub-layer or adhesion layer is intended to mean a relatively thick coating, used in order to improve mechanical properties such as abrasion resistance and/or scratch resistance of the antireflection coating and/or so as to reinforce its adhesion to the substrate or to the underlying coating.

The sub-layer has a thickness that is generally lower than or equal to any one of the following values: 600 nm, 500 nm, 450 nm, 400 nm, 375 nm, 300 nm, 250 nm. The sub-layer has a thickness that is higher than or equal to 100 nm, preferably higher than or equal to 125, 150, 160 or 180 nm. Increasing the thickness of the sub-layer leads to an abrasion resistance improvement, but preferably not to the point where a light absorption could occur, which, depending on the nature of the sub-layer, could significantly reduce the visual transmission factor $T_v$.

The sub-layer is preferably a $SiO_2$-based layer, this layer comprising preferably at least 80 % by weight of silica, more preferably at least 90 % by weight of silica, relative to the layer total weight, and even more preferably consists of a silica layer. In another embodiment, this $SiO_2$-based layer is a silica layer doped with alumina, in amounts such as defined hereabove, preferably consists of a silica layer doped with alumina.

A sub-layer of an antireflection coating is a category of layer that is well-identifiable and well-known to those of ordinary skill in the art, and cannot be confused with an abrasion-resistant and/or scratch-resistant coating (hard coat), described later in the present application.

It is preferred to use a sub-layer of the monolayer type. However, the sub-layer may be laminated (multilayer), especially when the sub-layer and the underlying coating (or the substrate, should the sub-layer be directly deposited onto the substrate) have a substantial refractive index difference. In such an event, the sub-layer may comprise, in addition to a layer having a thickness generally higher than or equal to 100 nm, which is referred to as the main layer, preferably at most two or three other layers ("impedance layers"), interleaved in between the optionally coated substrate and the main layer, which is generally a layer based on silica. Such additional layers are preferably thin layers, the function of which is to limit the multiple reflections at the sub-layer / underlying coating interface or at the interface sub-layer / substrate interface, whichever applies.

A multilayered sub-layer comprises preferably, in addition to the main layer, a layer with a high refractive index and with a thickness preferably lower than or equal to 80 nm, more preferably lower than or equal to 50 nm, and optionally a layer with a low refractive index, and with a thickness preferably lower than or equal to 80 nm, more preferably lower than or equal to 50 nm. The layer with a high refractive index does directly contact the substrate or the underlying coating, whichever applies.

Optionally, the exposed surface of the sub-layer, when present, may be submitted, prior to depositing the first layer of the antireflection coating, to a physical or a chemical activation treatment which may be selected from the pre-treatments the substrate may undergo prior to depositing the sub-layer and which have already been mentioned hereabove. The preferred pre-treatment is an ion bombardment, for example by using an ion gun-generated argon ion beam. Such physical or chemical activation treatments (preferably an ionic bombardment treatment) may also be performed on the exposed surface of one or more layer(s) of the multilayer antireflection coating, prior to depositing the subsequent layer of said multilayer antireflection coating.

The optical article of the invention may be made antistatic, that is to say not to retain and/or develop a substantial static charge, by incorporating at least one electrically conductive layer into the stack present on the surface of the article, preferably in the antireflection coating.

The ability for an optical article to evacuate a static charge obtained after rubbing with a piece of cloth or using any other procedure to generate a static charge (charge applied by corona...) may be quantified by measuring the time it takes for said charge to dissipate. Thus, antistatic optical articles have a discharge time of about a few hundred milliseconds, preferably 500 ms or less, whereas it is about several tens of seconds for a static optical article. In the present application, discharge times are measured according to the method exposed in the French application FR 2943798.

As used herein, an "electrically conductive layer" or an "antistatic layer" is intended to mean a layer which, due to its presence on the surface of a substrate, decreases the ability of the optical article to attract dust/particles due to charge accumulation. Preferably, when applied onto a non-antistatic substrate (i.e., having a discharge time higher than 500 ms), the antistatic layer enables the optical article not to retain and/or develop a substantial static charge, for example to have a discharge time of 500 ms or less after a static charge has been applied onto the surface thereof, so that small dust is prevented from adhering to the optical article due to prevention of static effects.

When the multilayer antireflection coating comprises at least one electrically conductive layer, it may be located at various places in the stack, generally in or in contact with the antireflection coating, provided that the reflective or anti-reflective properties thereof are not affected. It is preferably located between two layers of the antireflection coating, and/or is preferably adjacent to a layer with a high refractive index of such antireflection coating. In an embodiment, the electrically conductive layer is located immediately under a layer with a low refractive index of the antireflection coating, most preferably is the penultimate layer of the antireflection coating by being located immediately under the LI external layer of the antireflection coating.

In one embodiment, the electrically conductive layer is in direct contact with two layers having a refractive index of 1.55 or less, and said electrically conductive layer is preferably located in penultimate position of the antireflection coating in the direction moving away from the substrate.

The electrically conductive layer should be thin enough not to alter the transparency of the antireflection coating. The electrically conductive layer is preferably made from an electrically conductive and highly transparent material, generally an optionally doped metal oxide. In this case, the thickness thereof preferably ranges from 1 to 15 nm, more preferably from 1 to 10 nm, ideally from 2 to 8 nm. Preferably, the electrically conductive layer comprises an optionally doped metal oxide, selected from indium, tin, zinc oxides and mixtures thereof. Indium-tin oxide ($In_2O_3$:Sn, tin-doped indium oxide), aluminum-doped zinc oxide (ZnO:Al), indium oxide ($In_2O_3$) and tin oxide ($SnO_2$) are preferred. In a most preferred embodiment, the electrically conductive (and optically transparent) layer is an indium-tin oxide layer, noted ITO layer or a $SnO_2$ layer.

Generally, the electrically conductive layer contributes, within the stack, but in a limited manner because of its low thickness, to obtaining antireflection properties and typically represents a layer with a high refractive index in said coating.

The electrically conductive layer may be deposited according to any suitable method, for example by vacuum evaporation deposition, preferably ion-beam-assisted (IAD, described below) to increase its transparence, or by means of cathode sputtering.

The various layers of the antireflection coating, the sub-layer, are preferably deposited by vapor phase deposition, under vacuum, according to any of the following methods: i) by evaporation, optionally under ion beam assistance; ii) by ion-beam spraying; iii) by cathode sputtering; iv) by plasma-assisted chemical vapor deposition. These various methods are described in the following references "Thin Film Processes" and "Thin Film Processes II," Vossen & Kern, Ed., Academic Press, 1978 and 1991, respectively. A particularly recommended method is evaporation under vacuum. Preferably, the deposition of each of the above-mentioned layers is conducted by evaporation under vacuum. Such a process does advantageously avoid heating the substrate, which is particularly interesting for coating heat-sensitive substrates such as organic glasses.

A treatment step with energetic species such as previously defined may also be carried out, simultaneously whilst depositing one or more of the various layers of the antireflection coating or sub-layer. In particular, working under ion assistance enables to pack said layers while they are being formed, and increases their compression and refractive index. The use of ion assistance during the deposition of a layer produces a layer that is structurally different from a layer deposited without ion assistance.

The ion assisted deposition method or IAD is notably described in US patent application 2006/017011 and in US patent 5268781. Vapor phase deposition under ion assistance comprises depositing onto a substrate a layer of material by simultaneously bombarding by means of an ion beam said layer while it is being formed, and preferably under ion bombardment achieved by means of an ion gun. The ion bombardment leads to an atomic rearrangement in the coating being formed, which increases its density. The IAD not only allows an improvement of the deposited layer adhesion, but also an increase in their refractive index. The IAD operation may be performed by means of an ion gun, where ions are particles composed of gas atoms from which one or more electron(s) is or are extracted. It does preferably consist of bombarding the surface to be treated with oxygen ions. Other ionized gases may be used, either combined with oxygen, or not, for example argon, nitrogen, in particular a mixture of $O_2$ and argon according to a volume ratio ranging from 2:1 to 1:2. Preferred IAD treatments for the deposition of thin layers according to the present invention are disclosed in WO 2020/104392.

The antireflection coating / optional sub-layer / system may be deposited directly onto a bare substrate. In some applications, it is preferred that the main surface of the substrate be coated with one or more functional coatings improving its optical and/or mechanical properties, prior to depositing the antireflection coating of the invention. These functional coatings traditionally used in optics may be, without limitation, an impact-resistant primer layer, an abrasion- and/or scratch-resistant coating (hard coat), a polarized coating, an antistatic coating, a photochromic coating, a tinted coating or a stack made of two or more of such coatings.

The impact-resistant primer coating which may be used in the present invention can be any coating typically used for improving impact resistance of a finished optical article. By definition, an impact-resistant primer coating is a coating which improves the impact resistance of the finished optical article as compared with the same optical article but without the impact-resistant primer coating.

Typical impact-resistant primer coatings are (meth)acrylic-based coatings and polyurethane based coatings. In particular, the impact-resistant primer coating according to the invention can be made from a latex composition such as a poly(meth)acrylic latex, a polyurethane latex or a polyester latex.

Preferred primer compositions include compositions based on thermoplastic polyurethanes, such as those described in the patents JP 63-141001 and JP 63-87223, poly(meth)acrylic primer compositions, such as those described in the patents US 5,015,523 and US 6,503,631, compositions based on thermosetting polyurethanes, such as those described in the patent EP 0404111 and compositions based on poly(meth)acrylic latexes or polyurethane latexes, such as those described in the patents US 5,316,791 and EP 0680492. Preferred primer compositions are compositions based on polyurethanes and compositions based on latexes, in particular polyurethane latexes, poly(meth)acrylic latexes and polyester latexes, as well as their combinations. In one embodiment, the impact-resistant primer comprises colloidal fillers.

Poly(meth)acrylic latexes are latexes based on copolymers essentially made of a (meth)acrylate, such as for example ethyl (meth)acrylate, butyl (meth)acrylate, methoxyethyl (meth)acrylate or ethoxyethyl (meth)acrylate, with at least one other co-monomer in a typically lower amount, such as for example styrene.

Commercially available primer compositions suitable for use in the invention include the Witcobond® 232, Witcobond® 234, Witcobond® 240, Witcobond® 242 compositions (marketed by BAXENDEN CHEMICALS), Neorez® R-962, Neorez® R-972, Neorez® R-986 and Neorez® R-9603 (marketed by ZENECA RESINS), and Neocryl® A-639 (marketed by DSM coating resins).

The thickness of the impact-resistant primer coating, after curing, typically ranges from 0.05 to 30 $\mu$m, preferably 0.2 to 20 $\mu$m and more particularly from 0.5 to 10 $\mu$m, and even better 0.6 to 5 $\mu$m or 0.6 to 3 $\mu$m, and most preferably 0.8 to 1.5 $\mu$m.

The impact-resistant primer coating is preferably in direct contact with an abrasion- and/or scratch-resistant coating. In one embodiment, its refractive index ranges from 1.45 to 1.55. In another embodiment, its refractive index is higher than or equal to 1.55.

The abrasion- and/or scratch-resistant coating may be any layer traditionally used as an anti-abrasion and/or anti-scratch coating in the field of optical articles.

The abrasion- and/or scratch-resistant coatings are preferably hard coatings based on poly(meth)acrylates or silanes, generally comprising one or more mineral fillers intended to increase the hardness and/or the refractive index of the coating once cured.

Abrasion- and/or scratch-resistant coatings are preferably prepared from compositions comprising at least one alkoxysilane and/or a hydrolyzate thereof, obtained for example through hydrolysis with a hydrochloric acid solution and optionally condensation and/or curing catalysts.

Suitable coatings that are recommended for the present invention include coatings based on epoxysilane hydrolyzates such as those described in the patents EP 0614957, US 4211823 and US 5015523.

A preferred abrasion- and/or scratch-resistant coating composition is the one disclosed in the patent EP 0614957, in the name of the applicant. It comprises a hydrolyzate of epoxy trialkoxysilane and dialkyl dialkoxysilane, colloidal silica and a catalytic amount of an aluminum-based curing catalyst such as aluminum acetylacetonate, the rest being essentially composed of solvents traditionally used for formulating such compositions. Preferably, the hydrolyzate used is a hydrolyzate of $\gamma$-glycidoxypropyitrimethoxysilane (GLYMO) and dimethyldiethoxysilane (DMDES).

The abrasion- and/or scratch-resistant coating composition may be deposited by known methods and is then cured, preferably using heat or ultraviolet radiation. The thickness of the (cured) abrasion- and/or scratch-resistant coating does generally vary from 2 to 10 $\mu$m, preferably from 3 to 5 $\mu$m.

The optical article according to the invention may also comprise coatings formed on the antireflection coating and capable of modifying the surface properties thereof, such as a hydrophobic and/or oleophobic coating (antifouling top coat). These coatings are preferably deposited onto the outer layer of the antireflection coating. Generally, their thickness is lower than or equal to 10 nm, does preferably range from 1 to 10 nm, more preferably from 1 to 5 nm. Antifouling top coats are generally coatings of the fluorosilane or fluorosilazane type, preferably comprising fluoropolyether moieties and more preferably perfluoropolyether moieties. More detailed information on these coatings is disclosed in WO 2012/076714.

Instead of a hydrophobic coating, a hydrophilic coating may be used which provides anti-fog properties (anti-fog coating), or a precursor of an anti-fog coating which provides anti-fog properties when associated with a surfactant. Examples of such anti-fog precursor coatings are described in the patent application WO 2011/080472.

The additional coatings such as primers, hard coats and antifouling top coats may be deposited onto a main face of the substrate using methods known in the art, including spin-coating, dip-coating, spray-coating, evaporation, sputtering, chemical vapor deposition and lamination.

Typically, an optical article according to the invention comprises a substrate that is successively coated with an impact-resistant primer layer, an anti-abrasion and/or scratch-resistant layer, an optional sub-layer, an antireflection coating according to the invention, and a hydrophobic and/or oleophobic coating, or a hydrophilic coating which provides antifog properties, or an antifog precursor coating.

In one embodiment, the optical article according to the invention has a high luminous transmission in the visible range, which means, in the context of the present application, that its relative light transmission factor in the visible spectrum Tv is higher than or equal to any one of the following values: 88 %, 89 %, 90 %, 92 %, 94 %, 95 %, 96 %, 97 %, 98 %. Said Tv factor preferably ranges from 90 % to 99 %, more preferably from 92 % to 98 %, even better from 94 % to 97 %.

The Tv factor, also called "luminous transmission" of the system, is such as defined in ISO standard 13666:1998 and is measured accordingly to standard ISO 8980-3. It is defined as the average in the 380-780 nm wavelength range that is weighted according to the sensitivity of eye at each wavelength of the range and measured under D65 illumination conditions (daylight).

The present antireflection exhibits a very low mean light reflection factor $R_v$ between 380 nm and 780 nm. The "mean light reflection factor," noted $R_v$, also called "luminous reflection", is such as defined in the ISO 13666:1998 standard, and measured in accordance with the ISO 8980-4 standard (for an angle of incidence ranging from 0° to 15°, typically of 15°), i.e., this is the weighted spectral reflection average over the whole visible spectrum between 380 and 780 nm. It may be measured for all incidence angles $\theta$, thus defining a function $Rv(\theta)$.

The present multilayer antireflection coating provides the optical article with a mean light reflection factor $Rv$ between 380 nm and 780 nm, defined in the ISO 13666:1998 standard, lower than or equal to 0.9 %, on the main face of the optical article coated by the antireflection coating according to the invention, and preferably lower than or equal to any one of the following values: 0.8, 0.7, 0.6, 0.5, 0.4, 0.3, 0.25 %, for an angle of incidence ranging from 0° to 15°, preferably 15°.

Unless otherwise specified, transmittance and reflection factors are an average of light transmitted or reflected within the range that is not weighted according to the sensitivity of the eye at each wavelength of the range. In the present description, unless otherwise specified, transmittances/transmissions are measured at the center of the optical article for a thickness ranging from 0.5 to 2.5 mm, preferably 2 mm, at an angle of incidence ranging from 0° to 15°, preferably 0°.

Protection from phototoxic blue light provided by the optical article of the invention can be quantified by the blue-violet light protection factor BVC (blue violet cut) within a wavelength range of 400-455 nm, which is based on the transmission factor weighted by the light hazard function $B'(\lambda)$. Such factor is defined through the following relation:

$$BVC = 100 - \frac{\int_{400}^{455} B'(\lambda)T(\lambda)d\lambda}{\int_{400}^{455} B'(\lambda)d\lambda}$$

wherein $T(\lambda)$ represents the optical article transmission factor at a given wavelength $\lambda$, measured at an incident angle ranging from 0° to 45°, preferably at 0°, and the weighting function $B'(\lambda)$ represents the light hazard function shown on figure 1 of publication WO 2017/077359, in the name of the Applicant (relative spectral function efficiency), at a given wavelength $\lambda$. Said light hazard function results from work between Paris Vision Institute and Essilor International. It can be seen on this figure that blue light is the most dangerous to human eye around 430 nm. Values of the $B'(\lambda)$ function between 400 and 455 nm with a pitch of 5 nm are given hereunder:

| Wavelength (nm) | Weighting coefficient B'($\lambda$) |
|---|---|
| 400 | 0.1618 |
| 405 | 0.2100 |
| 410 | 0.3263 |
| 415 | 0.5900 |
| 420 | 0.8496 |
| 425 | 0.9800 |
| 430 | 1.0000 |
| 435 | 0.8400 |
| 440 | 0.6469 |
| 445 | 0.5300 |
| 450 | 0.4237 |
| 455 | 0.3050 |

In one embodiment of the invention, the multilayer antireflection coating according to the invention provides the optical article with the following property: the mean blue-violet light protection factor BVC is higher than or equal 20 % or 25 %, preferably higher than or equal to 30, 32 or 35 %, for an angle of incidence ranging from 0° to 45°, preferably 0°, and more preferably for the angles of incidence of 0°, 15°, 30° and 45 °, and even better for all angles of incidence from 0° to 45°.

In one embodiment, the optical article of the invention has an average blue light transmission factor $T_m^{B1}$ within a wavelength range of from 420 nm to 450 nm, which is higher than or equal to 60, 65, 69, 70, 75, 80 or 85 %, and lower than 95 %, preferably lower than or equal to 88 % for an angle of incidence ranging from 0° to 15° (preferably 0°), wherein $T_m^{B1}$ is defined by the following formula in which $T(\lambda)$ represents the optical article transmission factor at a given wavelength $\lambda$:

$$T_m^{B1} = \frac{\int_{420}^{450} T(\lambda)d\lambda}{450-420}$$

The average blue light transmission factor $T_m^{B1}$ takes into account all means blocking light between 420 and 450 nm, i.e., both absorption and reflection filters. A higher $T_m^{B1}$ factor is required to minimize yellowness of the optical article.

In one embodiment, the optical article of the invention has an average blue light transmission factor $T_m^{B2}$ within a wavelength range of from 465 nm to 495 nm, which is higher than or equal to 80, 85, 90, 92 or 94 %, for an angle of incidence ranging from 0° to 15° (preferably 0°), wherein $T_m^{B2}$ is defined by the following formula in which $T(\lambda)$ represents the optical article transmission factor at a given wavelength

$$T_m^{B2} = \frac{\int_{465}^{495} T(\lambda) \cdot d\lambda}{495-465}$$

A higher $T_m^{B2}$ factor is required to maximize transmission of chronobiologic blue light by the optical article. In one embodiment, the optical article of the invention has an average blue light transmission factor $T_m^{B3}$ within a wavelength range of from 440 nm to 460 nm, which is lower than or equal to 91, 90, 85, 80 or 76 %, for an angle of incidence ranging from 0° to 15° (preferably 0°), wherein $T_m^{B3}$ is defined by the following formula in which $T(\lambda)$ represents the optical article transmission factor at a given wavelength $\lambda$:

$$T_m^{B3} = \frac{\int_{440}^{460} T(\lambda)d\lambda}{460-440}$$

A lower $T_m^{B3}$ factor is required to maximize protection against LED blue light.

The colorimetric coefficients C* and h of the antireflective coating of the invention in the international colorimetric CIE L*a*b* are calculated between 380 and 780 nm, taking the standard illuminant D65 and the observer into account, for light having an angle of incidence of 15°, in reflection. The observer is a "standard observer" (10°) as defined in the international colorimetric system CIE L*a*b*.

The hue angle (h) of the antireflection coating relates to the residual color displayed by said antireflection coating (color of the reflected light).

In an embodiment, the hue angle (h) preferably ranges from 220° to 330°, more preferably from 300° to 325°, thus resulting in a perceived residual reflected color blue to violet.

Yet, it is possible to prepare antireflection coatings without limitation as regards their hue angle, which can vary from 20° to 330°. In one embodiment, the optical article has a hue angle (h) ranging from 130° to 150°, thus resulting in an antireflection coating having a green reflection. In another embodiment, the optical article has a hue angle (h) ranging from 50° to 85°, thus resulting in an antireflection coating having a gold reflection. In another embodiment, the optical article has a hue angle (h) ranging from 20° to 45°, thus resulting in an antireflection coating having an orange reflection. In another embodiment, the optical article has a hue angle (h) ranging from 220° to 260°, thus resulting in an antireflection coating having a blue reflection. In another embodiment, the optical article has a hue angle (h) ranging from 300° to 330°, thus resulting in an antireflection coating having a purple reflection.

In some aspects of the invention, the antireflection coating has a chroma (C*) that is lower than 60 (for an angle of incidence of 15°), more preferably lower than 50, 40, 30, 20, 10, 5 or 2. Obtaining low residual color intensity (chroma) articles is preferable with respect to wearer's comfort viewpoint, in the cases of ophthalmic lenses.

The invention further relates to a method of manufacturing an optical article such as described hereabove, comprising:

- providing an optical article comprising a substrate having a front main face and a rear main face,
- depositing onto at least one main face of the substrate, in this order, optionally a monolayer sub-layer having a thickness preferably higher than or equal to 100 nm and a multilayer antireflection coating comprising a stack of at least one layer of amorphous silicon and at least one low refractive index layer having a refractive index of 1.55 or less, thereby obtaining a coated optical article, and

16

said multilayer antireflection coating provides the optical article with the following property: the mean light reflection factor Rv on said at least one main face between 380 nm and 780 nm, defined in the ISO 13666:1998 standard, is lower than or equal to 0.9 %, for an angle of incidence ranging from 0° to 15°.

In one embodiment, the present optical article is prepared by forming on the substrate a primer coating and/or an abrasion- and/or scratch-resistant coating in a first manufacturing site, while the other coatings are formed in a second manufacturing site.

The following examples illustrate the present invention in a more detailed, but nonlimiting manner. Unless stated otherwise, all thicknesses disclosed in the present application relate to physical thicknesses. Unless otherwise specified, the refractive indexes referred to in the present invention are expressed for a wavelength of 550 nm, preferably at 20-25°C.

EXAMPLES

1. General procedures

The articles employed in the examples comprised a 65 mm-diameter polythiourethane MR8® lens substrate (from Mitsui Toatsu Chemicals Inc., refractive index = 1.6), with a power of -2.00 diopters and a center thickness of 1.2 mm, coated on their convex (front) main face (for all examples except examples 1C-3C) or concave (back) main face (for examples 1C-3C) with the impact resistant primer coating disclosed in the experimental part of WO 2010/109154 modified to have a refractive index of 1.6 by addition of high refractive index colloids, and the abrasion- and scratch-resistant coating (hard coat) disclosed in example 3 of EP 0614957 (modified to have a refractive index of 1.6 rather than 1.5 by adding high refractive index colloids), optionally a sub-layer, a multilayer filtering antireflection coating according to the invention, and the antifouling coating disclosed in the experimental section of patent application WO 2010/109154, i.e., by evaporation under vacuum of the Optool DSX® compound marketed by Daikin Industries (thickness: from 2 to 5 nm).

The other main face of the lens substrate (back main face for all examples except for examples 1C-3C: front main face) was coated with the same impact resistant primer coating and hard coat, and then with a conventional antireflection coating 1, 2 or 3 (see table 2) having the structure indicated hereunder and then with the same antifouling coating as the first main face:

Antireflection coating 1: $SiO_2/ZrO_2/SiO_2$underlayer/$ZrO_2$/$SiO_2$/$ZrO_2$/$SnO_2$/SiO2 with respective physical thicknesses (in nm): 15-20/5-10/144.7/15.1/26/89.7/6.5/72.4 within the teaching of WO2012/076714.

Antireflection coating 2: $SiO_2/ZrO_2/SiO_2$ underlayer/$ZrO_2$/$SiO_2$/$ZrO_2$/$SnO_2$/$SiO_2$ with respective thicknesses (in nm): 36.9/7/150.8/14.2/31.2/89/6.5/72.4.

Antireflection coating 3: $SiO_2$ underlayer /$ZrO_2$/$SiO_2$/$ZrO_2$/ITO/$SiO_2$ with respective physical thicknesses (in nm): 150/29/23/68/7/85 nm (example 6 of WO 2008/107325).

The various dielectric layers were deposited without heating the substrates, by vacuum evaporation, optionally assisted (IAD) during the deposition by a beam of oxygen and possibly argon ions (evaporation source: electron gun), and optionally under pressure regulation by supplying (passive) $O_2$ gas into the chamber.

The vacuum evaporation device used for depositing the various antireflective layers was a vacuum coater BAK from Physimeca having two systems for evaporating materials, an electron gun evaporation system, a thermal evaporator (Joule-effect evaporation system), and a Mark 2+ ion gun from Veeco for use in the preliminary phase of preparation of the surface of the substrate by argon ion bombardment (IPC) and in the ion-assisted deposition (IAD) of the layers.

2. Preparation of the optical articles

The lenses were placed on a carrousel provided with circular openings intended to accommodate the lenses to be treated, the concave side facing the evaporation sources and the ion gun.

The method for producing optical articles comprises introducing the lens substrate provided with the primer and abrasion-resistant coatings into a vacuum deposition chamber, conducting a pumping step until a high vacuum was created, and then applying the same treatment conditions as in WO 2020/104392 for successively evaporating the required number of layers (sub-layer, antireflection coating layers, antifouling coating, etc.). The raw material for depositing amorphous silicon (a-Si) layers is granule polycrystalline Si, which was purchased from the Kurt J. Lesker Company. For e-beam evaporation, baking of the granule material is needed to create a cake before depositing the a-Si layers, similar to depositing the ZrOz layers using granule raw material.

3. Testing methods

The following test procedures were used to evaluate the optical articles prepared according to the present invention. Several samples for each system were prepared for measurements and the reported data were calculated with the average of the different samples.

Colorimetric measurements of hue angle h, chroma C* and b* (if available) for the face coated with the stack of the invention were carried out with a Zeiss spectrophotometer in the international colorimetric CIE (L*, a*, b*) space, taking into account the standard illuminant D65, and the standard observer 10°, in reflection.

$R_v$, $R_{UV}$, $R_m^{B1}$, $R_m^{B2}$, $R_m^{B3}$, $R_m^{NIR}$, $R^{940nm}$, $R^{850nm}$, BVC, Tv, $T_m^{NIR}$, $T_m^{B1}$, $T_m^{B2}$ and $T_m^{B3}$ were computed from the same measurement, in reflection for an angle of incidence of 15° or transmission for an angle of incidence of 0° (for the last six parameters).

4. Results

The structural characteristics and the optical performances of the ophthalmic lenses obtained in the examples are detailed hereunder. The sub-layer, when present, is gray-colored. The amorphous silicon layer is noted a-Si. Table 1 shows the reflection and colorimetric properties of the different coatings prepared according to the invention and the comparative examples, while Table 2 shows the transmission properties of the different ophthalmic lenses prepared.

| Example 1A | |
|---|---|
| | |
| Substrate + primer/hard coat | |
| $ZrO_2$ | 93.62 nm |
| a-Si | 10 nm |
| $SiO_2$ | 83.67 nm |
| | |
| Top coat | |

| Example 2A | |
|---|---|
| | |
| Substrate + primer/hard coat | |
| $ZrO_2$ | 92.17 nm |
| a-Si | 13.8 nm |
| $SiO_2$ | 95.86 nm |
| | |
| Top coat | |

| Example 3A | |
|---|---|
| | |
| Substrate + primer/ hard coat | |
| $ZrO_2$ | 90.6 nm |
| a-Si | 7.7 nm |
| $ZrO_2$ | 35 nm |
| $SiO_2$ | 76.3 nm |
| Top coat | |

| Example 4A | |
|---|---|
| | |

(continued)

| Substrate + primer/hard coat | |
|---|---|
| ZrO$_2$ | 85.1 nm |
| a-Si | 9.1 nm |
| ZrO$_2$ | 33.4 nm |
| SiO$_2$ | 69.9 nm |
| Top coat | |

| Example 5A | |
|---|---|
| | |
| Substrate + primer/hard coat | |
| ZrO$_2$ | 56.3 nm |
| SiO$_2$ | 25.7 nm |
| a-Si | 12.4 nm |
| SiO$_2$ | 99.2 nm |
| Top coat | |

| Example 6A | |
|---|---|
| | |
| Substrate + primer/ hard coat | |
| ZrO$_2$ | 55 nm |
| SiO$_2$ | 20 nm |
| a-Si | 15 nm |
| SiO$_2$ | 95 nm |
| Top coat | |

| Example 7A | |
|---|---|
| | |
| Substrate + primer/hard coat | |
| SiO$_2$ | 150 nm |
| a-Si | 6 nm |
| SiO$_2$ | 40 nm |
| a-Si | 7 nm |
| SiO$_2$ | 100 nm |
| | |
| Top coat | |

| Example 8A | |
|---|---|
| | |
| Substrate + primer/hard coat | |
| SiO$_2$ | 40.4 nm |
| a-Si | 8.8 nm |

(continued)

| Substrate + primer/hard coat | |
|---|---|
| SiO$_2$ | 37.9 nm |
| ZrO$_2$ | 37.2 nm |
| a-Si | 5.2 nm |
| SiO$_2$ | 107 nm |
| Top coat | |

| Example 9A | |
|---|---|
| | |
| Substrate + primer/ hard coat | |
| ZrO$_2$ | 95 nm |
| a-Si | 7 nm |
| ZrO$_2$ | 10 nm |
| SiO$_2$ | 85 nm |
| | |
| | |
| Top coat | |

| Example 2B | |
|---|---|
| | |
| Substrate + primer/hard coat | |
| | |
| ZrO$_2$ | 100 nm |
| a-Si | 15 nm |
| ZrO$_2$ | 15 nm |
| SiO$_2$ | 100 nm |
| | |
| | |
| Top coat | |

| Example 3B | |
|---|---|
| | |
| Substrate + primer/hard coat | |
| ZrO$_2$ | 10 nm |
| a-Si | 7 nm |
| SiO$_2$ | 30 nm |
| ZrO$_2$ | 100 nm |
| a-Si | 6 nm |
| SiO$_2$ | 110 nm |

(continued)

| Substrate + primer/hard coat | |
|---|---|
| | |
| Top coat | |

| Example 1B | |
|---|---|
| | |
| Substrate + primer/hard coat | |
| SiO$_2$ | 159.06 nm |
| ZrO$_2$ | 22.78 nm |
| SiO$_2$ | 47.27nm |
| ZrO$_2$ | 140.54 nm |
| a-Si | 10 nm |
| SnO$_2$ | 6.5 nm |
| SiO$_2$ | 100.3 nm |
| Top coat | |

| Example 1C | |
|---|---|
| | |
| Substrate + primer/hard coat | |
| ZrO$_2$ | 56.7 nm |
| a-Si | 8.8 nm |
| ZrO$_2$ | 55.8 nm |
| SiO$_2$ | 68.1 nm |
| | |
| | |
| Top coat | |

| Example 2C | |
|---|---|
| | |
| Substrate + primer/hard coat | |
| ZrO$_2$ | 67.1 nm |
| SiO$_2$ | 25.4 nm |
| a-Si | 8.4 nm |
| SiO$_2$ | 65.5 nm |
| | |
| | |
| Top coat | |

| Example 3C | |
|---|---|
| | |
| Substrate + primer/ hard coat | |
| ZrO$_2$ | 51.4 nm |

(continued)

| Substrate + primer/ hard coat | |
|---|---|
| a-Si | 8.7 nm |
| SiO$_2$ | 17.6 nm |
| ZrO$_2$ | 17.4 nm |
| a-Si | 6.5 nm |
| SiO$_2$ | 71.3 nm |
| Top coat | |

| Example 1D | |
|---|---|
| | |
| Substrate + primer/hard coat | |
| ZrO$_2$ | 141.72 nm |
| SiO$_2$ | 184.53 nm |
| ZrO$_2$ | 137.49 nm |
| SiO$_2$ | 183.7 nm |
| ZrO$_2$ | 81.8 nm |
| a-Si | 11 nm |
| SiO$_2$ | 91.42 nm |
| Top coat | |

| Example 2D | |
|---|---|
| | |
| Substrate + primer/hard coat | |
| Ta$_2$O$_5$ | 129.06 nm |
| SiO$_2$ | 180.31 nm |
| Ta$_2$O$_5$ | 126.13 nm |
| SiO$_2$ | 180.79 nm |
| Ta$_2$O$_5$ | 78.75 nm |
| a-Si | 11 nm |
| SiO$_2$ | 93.32 nm |
| Top coat | |

| Example 3D | |
|---|---|
| | |
| Substrate + primer/ hard coat | |
| TiO$_2$ | 104.81 nm |
| SiO$_2$ | 153.09 nm |
| TiO$_2$ | 96.03 nm |
| SiO$_2$ | 172.99 nm |
| TiO$_2$ | 97.92 nm |

(continued)

| Substrate + primer/ hard coat | |
|---|---|
| a-Si | 11 nm |
| SiO$_2$ | 96.4 nm |
| Top coat | |

| Example 4D | |
|---|---|
| | |
| Substrate + primer/hard coat | |
| TiO$_2$ | 107.81 nm |
| SiO$_2$ | 154.07 nm |
| TiO$_2$ | 98.61 nm |
| SiO$_2$ | 151.91 nm |
| TiO$_2$ | 79.08 nm |
| a-Si | 10 nm |
| SiO$_2$ | 75.4 nm |
| Top coat | |

| Example 5D | |
|---|---|
| | |
| Substrate + primer/hard coat | |
| TiO$_2$ | 102.89 nm |
| SiO$_2$ | 142.8 nm |
| TiO$_2$ | 90.46 nm |
| SiO$_2$ | 139.28 nm |
| TiO$_2$ | 74.4 nm |
| a-Si | 10 nm |
| SiO$_2$ | 70.91 nm |
| Top coat | |

| Example 10A | |
|---|---|
| | |
| Substrate + primer/ hard coat | |
| ZrO$_2$ | 75 nm |
| SiO$_2$ | 15 nm |
| a-Si | 13 nm |
| SiO$_2$ | 85 nm |
| | |
| | |

(continued)

| Substrate + primer/ hard coat | |
|---|---|
| | |
| Top coat | |

| Comparative example 2 according to WO 2022/258793) | |
|---|---|
| | |
| Substrate + primer/hard coat | |
| $ZrO_2$ | 40.2 nm |
| $SiO_2$ | 48.1 nm |
| $ZrO_2$ | 53.3 nm |
| $SiO_2$ | 39.8 nm |
| $ZrO_2$ | 94.7 nm |
| $SnO_2$ | 6.5 nm |
| $SiO_2$ | 99.1 nm |
| Top coat | |

| Comparative example 1 according to the teaching of WO 2013/171434 | |
|---|---|
| | |
| Substrate + primer/hard coat | |
| $ZrO_2$ | 40.6 nm |
| $SiO_2$ | 33.7 nm |
| $ZrO_2$ | 59.4 nm |
| $SnO_2$ | 6.5 nm |
| $SiO_2$ | 114.8 nm |
| | |
| | |
| Top coat | |

**Table 1**

| Example | Rv | h | C* | $R_m^{B1}$ | $R_m^{B2}$ | $R_m^{B3}$ | Ruv (35°) | $R_m^{NIR}$ | $R^{940nm}$ | $R^{850nm}$ |
|---|---|---|---|---|---|---|---|---|---|---|
| 1A | 0.46 | 23 | 9.7 | 0.10 | 0.34 | 0.18 | 31.19 | 13.24 | 12.28 | 10.01 |
| 2A | 0.18 | 310 | 28.0 | 3.02 | 0.19 | 1.37 | 30.68 | 12.75 | 11.20 | 8.50 |
| 3A | 0.71 | 134 | 8.9 | 0.17 | 0.50 | 0.04 | 7.70 | 12.81 | 10.64 | 7.47 |
| 4A | 0.73 | 83 | 7.0 | 0.06 | 0.59 | 0.18 | 6.48 | 14.22 | 12.69 | 9.84 |
| 5A | 0.77 | 224 | 14.1 | 1.48 | 1.74 | 1.54 | 14.39 | 8.29 | 7.00 | 4.99 |
| 6A | 0.22 | 305 | 15.5 | 1.41 | 0.58 | 0.98 | 16.77 | 10.88 | 10.34 | 8.78 |
| 7A | 0.62 | 318 | 28.2 | 2.91 | 1.38 | 2.43 | 8.59 | 7.03 | 8.10 | 7.81 |
| 8A | 0.25 | 316 | 17.2 | 1.49 | 0.36 | 0.64 | 36.33 | 7.98 | 7.73 | 6.59 |
| 9A | 0.26 | 102 | 0.48 | 0.08 | 0.44 | 0.15 | 16.82 | 12.57 | 11.14 | 8.50 |
| 10A | 0.37 | 199 | 0.44 | 0.15 | 0.71 | 0.38 | 13.73 | 11.31 | 10.25 | 8.05 |

**EP 4 764 623 A1**

(continued)

| Example | Rv | h | C* | $R_m^{B1}$ | $R_m^{B2}$ | $R_m^{B3}$ | Ruv (35°) | $R_m^{NIR}$ | $R^{940nm}$ | $R^{850nm}$ |
|---|---|---|---|---|---|---|---|---|---|---|
| 1B | 0.66 | 305 | 45.0 | 9.02 | 0.78 | 4.61 | 22.46 | 6.81 | 1.45 | 2.03 |
| 2B | 0.25 | 309 | 59.3 | 9.81 | 1.72 | 6.09 | 26.93 | 10.63 | 7.66 | 4.48 |
| 3B | 0.69 | 301 | 54.7 | 12.16 | 5.03 | 10.10 | 19.78 | 7.40 | 4.40 | 2.18 |
| 1C | 0.59 | 296 | 28.9 | 3.98 | 2.43 | 3.62 | 1.90 | 14.60 | 13.42 | 10.74 |
| 2C | 0.79 | 316 | 24.3 | 2.90 | 1.65 | 2.62 | 1.05 | 11.13 | 10.75 | 9.25 |
| 3C | 0.68 | 325 | 27.5 | 2.59 | 1.17 | 2.21 | 0.81 | 11.13 | 10.75 | 9.25 |
| 1D | 0.47 | 308 | 28.8 | 1.88 | 1.65 | 1.82 | 20.09 | 37.14 | 40.38 | 8.59 |
| 2D | 0.66 | 299 | 34.9 | 2.92 | 2.49 | 4.85 | 27.11 | 43.95 | 54.68 | 21.77 |
| 3D | 0.66 | 307 | 38.0 | 2.89 | 1.97 | 5.75 | 33.45 | 50.95 | 70.24 | 57.16 |
| 4D | 0.80 | 306 | 44.9 | 7.09 | 3.98 | 8.41 | 22.65 | 48.27 | 76.48 | 73.00 |
| 5D | 0.79 | 316 | 50.8 | 9.79 | 0.62 | 5.68 | 17.09 | 39.85 | 72.59 | 76.79 |
| Comparative example 1 | 0.66 | 311 | 63.4 | 13.23 | 2.58 | 8.48 | 27.59 | 5.20 | 2.73 | 1.27 |
| Comparative example 2 | 0.78 | 308 | 85.1 | 27.08 | 7.19 | 19.94 | 37.40 | 6.69 | 7.73 | 7.01 |

**Table 2**

| Example | AR coating on other face | Tv | $T_m^{B1}$ | $T_m^{B2}$ | $T_m^{B3}$ | BVC (B') | $T_m^{NIR}$ |
|---|---|---|---|---|---|---|---|
| Comparative 1 | 1 | 97.09 | 83.35 | 95.72 | 89.44 | 24.80 | 80.84 |
| Comparative 1B | 2 | 97.85 | 83.35 | 95.72 | 89.44 | 25.04 | 81.18 |
| Comparative 2 | 2 | 97.67 | 69.33 | 90.33 | 76.99 | 37.43 | 79.89 |
| 1A | 1 | 95.96 | 83.16 | 91.59 | 87.33 | 24.53 | 74.79 |
| 2A | 1 | 95.14 | 74.41 | 88.65 | 80.77 | 31.51 | 75.89 |
| 3A | 1 | 96.20 | 86.12 | 93.22 | 90.09 | 21.82 | 74.81 |
| 4A | 1 | 96.03 | 85.04 | 92.53 | 89.02 | 22.79 | 74.10 |
| 5A | 1 | 94.78 | 76.98 | 87.99 | 82.20 | 30.51 | 78.47 |
| 6A | 1 | 95.03 | 76.63 | 88.19 | 82.03 | 30.86 | 77.29 |
| 7A | 1 | 94.72 | 75.99 | 87.91 | 81.37 | 31.41 | 79.21 |
| 8A | 1 | 94.60 | 74.49 | 87.38 | 80.55 | 33.07 | 78.60 |
| 9A | 1 | 96.71 | 86.90 | 93.46 | 90.48 | 20.89 | 75.33 |
| 10A | 1 | 95.19 | 77.99 | 88.66 | 82.95 | 29.60 | 76.23 |
| 1B | 1 | 95.23 | 75.33 | 89.65 | 82.05 | 32.65 | 79.69 |
| 2B | 1 | 94.87 | 69.28 | 86.47 | 76.69 | 37.98 | 76.88 |
| 3B | 2 | 94.83 | 70.86 | 85.46 | 76.51 | 35.95 | 79.63 |
| 1C | 3 | 96.44 | 85.07 | 92.23 | 88.50 | 22.48 | 74.49 |
| 2C | 3 | 95.72 | 79.81 | 90.32 | 84.52 | 27.63 | 77.02 |
| 3C | 3 | 94.97 | 76.37 | 88.56 | 81.67 | 30.59 | 75.86 |
| 1D | 1 | 95.88 | 81.95 | 91.35 | 86.34 | 26.32 | 56.43 |
| 2D | 1 | 95.71 | 79.21 | 90.12 | 83.65 | 27.19 | 50.72 |
| 3D | 1 | 95.43 | 77.78 | 89.33 | 85.08 | 31.61 | 43.80 |
| 4D | 1 | 95.59 | 82.86 | 86.49 | 83.25 | 25.20 | 44.94 |

(continued)

| Example | AR coating on other face | Tv | $T_m^{B1}$ | $T_m^{B2}$ | $T_m^{B3}$ | BVC (B') | $T_m^{NIR}$ |
|---|---|---|---|---|---|---|---|
| 5D | 1 | 95.64 | 73.96 | 91.81 | 78.56 | 31.38 | 51.38 |

The reflection and transmission spectra of lenses provided with the different coatings of tables 1 and 2 (Examples 1A, 1B, 2B, 3B, 1C, 2C, 3C, 1D, 2D, 3D, 4D, 5D and CE1 and CE2) are shown on figures 2 to 17. All the coatings according to the invention have a low mean light reflection factor in the visible range (Rv $\leq$ 0.8 %), and therefore exhibit outstanding transparency properties, high global transmission in the visible range (Tv > 94 %) and high protection from harmful blue light, by absorption and optionally by reflection (BVC (B') > 21, $T_m^{B1}$ < 87 %, $T_m^{B3}$ < 90.5 %).

$R_m^{B2}$ of these coatings is low, which is chronobiologically desirable.

Examples 1A-10A show various examples of antireflection coatings comprising one or two amorphous silicon layers, corresponding to the first main embodiment of the invention. Figure 2 shows that the lenses exhibit a low reflection of visible light, even in the blue light range. All these stacks have much lower C* (reflection chroma), $R_m^{B1}$, $R_m^{B2}$ and $R_m^{B3}$ than those of comparative examples 1 and 2, indicating a much weaker residual reflection color of these inventive coatings (better aesthetic appearance), which was observed experimentally. The antireflection coatings can be designed with various reflection colors, e.g., orange (example 1A), purple (examples 2A, 6A, 7A, 8A), green (example 3A), gold (example 4A), or blue (example 5A). It is also possible to design achromic antireflection coatings with very low chroma, e.g., C*<2 (examples 9A, 10A). The Rv coefficient of some stacks is very low (<0.30 %, examples 2A, 6A, 8A, 9A).

Generally, increasing the total thickness of amorphous silicon layers in the stack increases protection from blue light (higher BVC (B') values) and slightly decreases visible light transmittance (Tv) of the resulting lens.

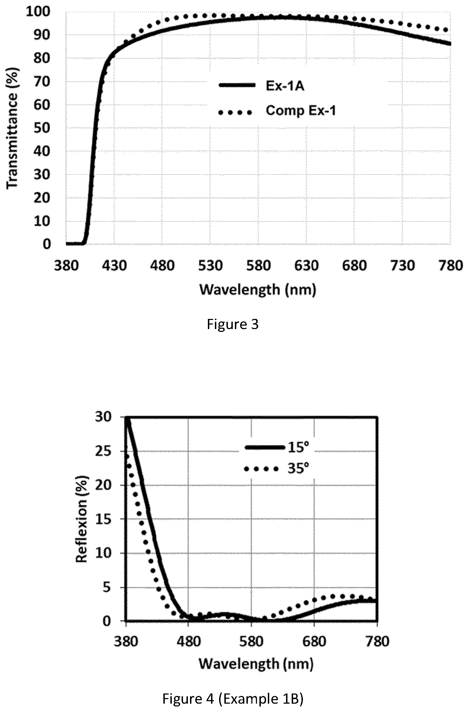

Figure 3 shows transmission spectra for lenses having the coating of example 1A or comparative example 1 on their front face and the antireflection coating noted "1" on their back side. It can be seen that the blue cut efficiency of example 1A is comparable to that of comparative example 1 (with similar $T_m^{B1}$, $T_m^{B3}$ and BVC (B') values) and that the blue cut efficiency of examples 2A, 5A-8A and 10A is higher than that of comparative example 1 (with lower $T_m^{B1}$, $T_m^{B3}$, higher BVC(B') values).

Examples 1B-3B correspond to the second main embodiment of the invention, in which high blue light cutting efficiency results from both absorption and reflection. They show a high reflection in the blue-violet region (reflection factors $R_m^{B1}$ higher than 9 %, $R_m^{B3}$ higher than 4.5 %, figures 4-6), which indicates an effective protection against phototoxic blue light and particularly against LED blue light emission from digital devices, without being detrimental to the antireflection performances in the visible region. These antireflection coatings do not make any compromise between low reflection properties in the visible range (Rv) and significant reflection of harmful blue light (high $R_m^{B1}$ and $R_m^{B3}$). Thus, these ophthalmic lenses enable to prevent a degenerative process of a wearer's eye as a consequence of blue light-induced phototoxicity, such as the age-related macular degeneration.

Their C* and $R_m^{B1}$ are lower than those of comparative examples 1 and 2, indicating a weaker residual reflection color of these inventive coatings (better aesthetic appearance), which was observed experimentally.

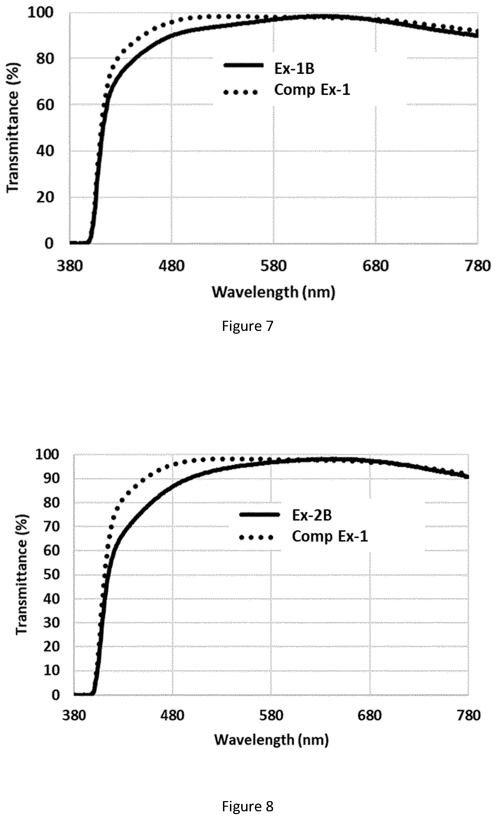

Figures 7, 8 and 9 show transmission spectra for lenses having the coating of example 1B, 2B or 3B on their front face and the antireflection coating noted "1" in § 1(examples 1B and 2B) or "2" (example 3B) on their back side. It can be seen that the blue cut efficiency of examples 1B and 2B is much higher than that of comparative example 1 and that the blue cut efficiency of example 3B is much higher than that of comparative example 1B (lower $T_m^{B1}$ and $T_m^{B3}$, higher BVC (B') values) and similar to comparative example 2.

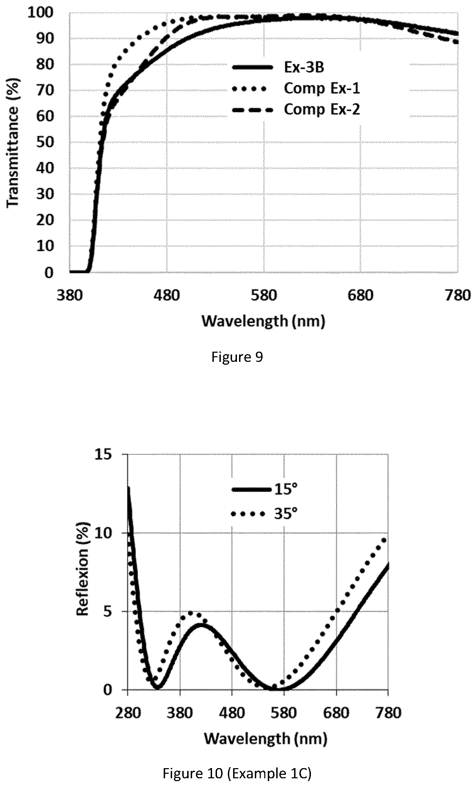

Examples 1C-3C correspond to the third main embodiment of the invention and show a very low Ruv coefficient (< 2 %), which indicates an effective protection against UV radiation (figures 10, 11 and 12). These stacks have similar Rv as that of comparative example 1. Their C*, $R_m^{B1}$ and $R_m^{B3}$ are significantly lower than those of comparative example 1, indicating a weaker visible reflection color of these inventive coatings, which was observed experimentally.

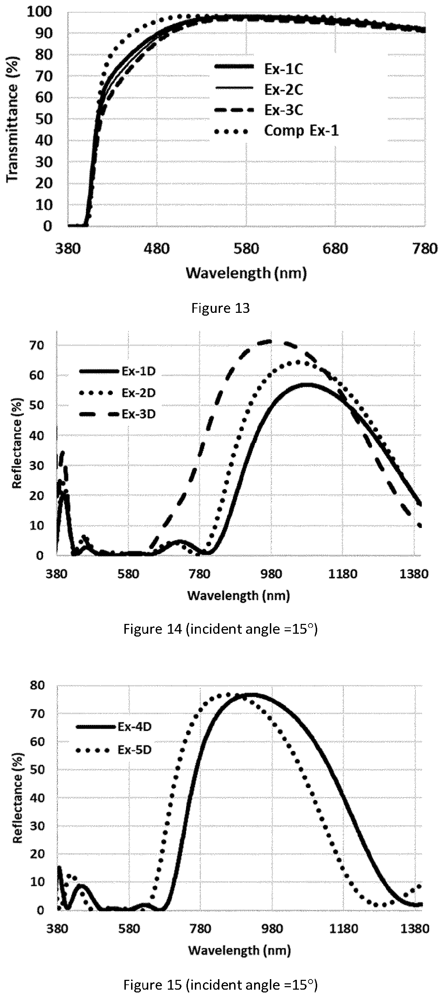

Figure 13 shows transmission spectra for lenses having the coating of example 1C, 2C or 3C on their back face and the antireflection coating noted "3" on their front side. It can be seen that the transmission properties in the visible range are similar to comparative example 1 with slightly lower Tv, comparative or better blue cut.

Examples 1D-5D correspond to the fourth main embodiment of the invention and show a high reflection peak in NIR region ($R_m^{NIR}$ higher than 35%, figures 14, 15), which indicates an effective protection against NIR radiation. These stacks have similar $R_v$ as that of comparative example 1. Their C*, $R_m^{B1}$ and $R_m^{B3}$ are significantly lower than those of comparative example 1, indicating a weaker visible reflection color of these inventive coatings, which was observed experimentally. The mean reflection in NIR region of these coatings (37-51 %) are much higher than that of comparative example 1 (~5 %).

The coating of example 4D has its reflection peaks centered at 940 nm, while the coating of example 5D has its reflection peaks centered at 850 nm. In addition to the blue absorption property, the coatings of examples 4D and 5D also have a certain level of reflection of harmful blue light ($R_m^{B1}$ > 7 %).

Figure 16 shows transmission spectra for lenses having the coating of example 1D, 2D, 3D, 4D or 5D on their front face and the antireflection coating noted "1" on their back side. It can be seen that the NIR cut of examples 1D-5D is much higher than that of comparative example 1, with much lower $T_m^{NIR}$.

**Claims**

1. An optical article comprising a substrate having a front main face and a rear main face, at least one main face of which having a multilayer antireflection coating comprising at least one low refractive index layer having a refractive index of 1.55 or less, the refractive indexes being expressed at a wavelength of 550 nm, and at least one layer of amorphous silicon, and wherein said multilayer antireflection coating provides the optical article with the following property: the mean light reflection factor $R_v$ on said at least one main face between 380 nm and 780 nm, defined in the ISO 13666:1998 standard, is lower than or equal to 0.9 %, for an angle of incidence ranging from 0° to 15°.

2. An optical article according to claim 1, wherein said multilayer antireflection coating provides the optical article with the following property: the mean reflection factor $R_{UV}$ on said at least one main face between 280 nm and 380 nm, weighted by the function $W(\lambda)$ defined in the ISO 13666:1998 standard, is lower than or equal to 5 %, for an angle of incidence of 35°.

3. An optical article according to claim 1, wherein said multilayer antireflection coating provides the optical article with the following properties:

   - the average blue light reflection factor on said at least one main face $R_m^{B1}$ within a wavelength range of from 420 nm to 450 nm is higher than or equal to 8 %, for an angle of incidence ranging from 0° to 15°,
   - the average blue light reflection factor on said at least one main face $R_m^{B2}$ within a wavelength range of from 465 nm to 495 nm is lower than or equal to 8 %, for an angle of incidence ranging from 0° to 15°,
   - the average blue light reflection factor on said at least one main face $R_m^{B3}$ within a wavelength range of from 440 nm to 460 nm is higher than or equal to 4 %, for an angle of incidence ranging from 0° to 15°.

4. An optical article according to claim An optical article according to claim 1, wherein said multilayer antireflection coating provides the optical article with the following properties:, wherein the spectral reflectivity curve of said multilayer antireflection coating for an angle of incidence ranging from 0° to 15° has a reflection peak centered at a wavelength higher than or equal to 330 nm and lower than or equal to 420 nm.

5. An optical article according to claim 1, wherein said multilayer antireflection coating provides the optical article with the following properties:

   - the average blue light reflection factor on said at least one main face $R_m^{B1}$ within a wavelength range of from 420 nm to 450 nm is lower than or equal to 4 %, for an angle of incidence ranging from 0° to 15°,
   - the average blue light reflection factor on said at least one main face $R_m^{B2}$ within a wavelength range of from 465 nm to 495 nm is lower than or equal to 2 %, for an angle of incidence ranging from 0° to 15°,
   - the average blue light reflection factor on said at least one main face $R_m^{B3}$ within a wavelength range of from 440 nm to 460 nm is lower than or equal to 3 %, for an angle of incidence ranging from 0° to 15°.

6. An optical article according to claim 1, wherein said multilayer antireflection coating provides the optical article with the following property: the mean reflection factor in the near infrared region $R_m^{NIR}$ on said at least one main face within a wavelength range of from 780 nm to 1400 nm is higher than or equal to 30 %, for an angle of incidence ranging from 0° to 15°, wherein $R_m^{NIR}$ is defined by the following formula in which $R(\lambda)$ represents the reflection factor at wavelength $\lambda$:

$$R_m^{NIR} = \frac{\int_{780}^{1400} R(\lambda)d\lambda}{1400-780}$$

7. An optical article according to any one of the preceding claims, having a relative light transmission factor Tv in the visible spectrum between 380 nm and 780 nm, defined in the ISO 13666:1998 standard, higher than or equal to 94 %.

8. An optical article according to any one of the preceding claims, wherein said layer of amorphous silicon has a thickness higher than 10 nm.

9. An optical article according to any one of the preceding claims, wherein said multilayer antireflection coating provides the optical article with the following property: the mean blue-violet light protection factor BVC within a wavelength range of from 400 nm to 455 nm is higher than or equal 20 %, preferably higher than or equal to 25 %, for an angle of incidence ranging from 0° to 45°, wherein BVC is defined by the following formula in which $T(\lambda)$ represents the optical article transmission factor at a given wavelength $\lambda$, and the weighting function $B'(\lambda)$ represents the light hazard function at a given wavelength $\lambda$:

$$BVC = 100\% - \frac{\int_{400}^{455} B'(\lambda) \cdot T(\lambda) \cdot d\lambda}{\int_{400}^{455} B'(\lambda) \cdot d\lambda}$$

10. An optical article according to any one of the preceding claims, having an average blue light transmission factor $T_m^{B1}$ within a wavelength range of from 420 nm to 450 nm, which is higher than or equal to 65 %, and lower than 95 %, preferably lower than or equal to 88 % for an angle of incidence ranging from 0° to 15°, wherein $T_m^{B1}$ is defined by the following formula in which $T(\lambda)$ represents the optical article transmission factor at a given wavelength $\lambda$:

$$T_m^{B1} = \frac{\int_{420}^{450} T(\lambda)d\lambda}{450-420}$$

11. An optical article according to any one of the preceding claims, wherein said multilayer antireflection coating comprises a number of layers lower than or equal to 10, preferably ranging from 3 to 7.

12. An optical article according to any one of the preceding claims, wherein said multilayer antireflection coating has a total thickness lower than or equal to 700 nm, preferably lower than or equal to 600 nm.

13. An optical article according to any one of the preceding claims, wherein said optical article has an average blue light transmission factor $T_m^{B2}$ within a wavelength range of from 465 nm to 495 nm, which is higher than or equal to 85 %, for an angle of incidence ranging from 0° to 15°, wherein $T_m^{B2}$ is defined by the following formula in which $T(\lambda)$ represents the optical article transmission factor at a given wavelength $\lambda$:

$$T_m^{B2} = \frac{\int_{465}^{495} T(\lambda) \cdot d\lambda}{495-465}$$

14. An optical article according to any one of the preceding claims, wherein said optical article has an average blue light transmission factor $T_m^{B3}$ within a wavelength range of from 440 nm to 460 nm, which is lower than or equal to 90 %, for an angle of incidence ranging from 0° to 15°, preferably 0°, wherein $T_m^{B3}$ is defined by the following formula in which $T(\lambda)$ represents the optical article transmission factor at a given wavelength $\lambda$:

$$T_m^{B3} = \frac{\int_{440}^{460} T(\lambda)d\lambda}{460-440}$$

15. An eyewear comprising an optical article according to any one of the preceding claims.

Figure 1

Figure 2 (Example 1A)

Figure 3

Figure 4 (Example 1B)

Figure 5 (Example 2B)

Figure 6 (Examples 3B)

Figure 7

Figure 8

Figure 9

Figure 10 (Example 1C)

Figure 11 (Example 2C)

Figure 12 (Example 3C)

Figure 13

Figure 14 (incident angle =15°)

Figure 15 (incident angle =15°)

Figure 16

Figure 17

Europäisches
Patentamt

European
Patent Office

Office européen
des brevets

# EUROPEAN SEARCH REPORT

**Application Number**

EP 24 30 7157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2010 140008 A (SEIKO EPSON CORP) 24 June 2010 (2010-06-24) | 1-7,9-15 | INV. G02B1/115 |
| A | * figures 1, 9 * | 8 | |
| A | WO 2017/077357 A1 (ESSILOR INT [FR]) 11 May 2017 (2017-05-11) * claim 12 * | 1-15 | |
| A | WO 2013/171434 A1 (ESSILOR INT [FR]) 21 November 2013 (2013-11-21) * claims 1, 4 * | 1-15 | |
| A | EP 4 102 264 A1 (ESSILOR INT [FR]) 14 December 2022 (2022-12-14) * claim 1 * | 1-15 | |
| A | WO 2017/077359 A1 (ESSILOR INT [FR]) 11 May 2017 (2017-05-11) * claim 14 * | 1-15 | |
| A | US 2021/294126 A1 (TROTTIER-LAPOINTE WILLIAM [FR]) 23 September 2021 (2021-09-23) * claim 13 * | 1-15 | **TECHNICAL FIELDS SEARCHED (IPC)** G02B |
| A | CN 106 431 004 A (JIANGSU XIUQIANG GLASSWORK CO LTD) 22 February 2017 (2017-02-22) * examples 1-3 * * claim 8 * | 1-15 | |

The present search report has been drawn up for all claims

| Place of search | Date of completion of the search | Examiner |
|---|---|---|
| Munich | 20 May 2025 | Le Masson, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 7157

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2025

| Patent document cited in search report | | Publication date | Patent family member(s) | | Publication date |
|---|---|---|---|---|---|
| JP 2010140008 | A | 24-06-2010 | NONE | | |
| WO 2017077357 | A1 | 11-05-2017 | AU | 2015413558 A1 | 24-05-2018 |
| | | | AU | 2021290261 A1 | 27-01-2022 |
| | | | BR | 112018008635 A2 | 30-10-2018 |
| | | | CA | 3003980 A1 | 11-05-2017 |
| | | | CN | 108235740 A | 29-06-2018 |
| | | | EP | 3371645 A1 | 12-09-2018 |
| | | | JP | 6786614 B2 | 18-11-2020 |
| | | | JP | 2018533082 A | 08-11-2018 |
| | | | KR | 20180078248 A | 09-07-2018 |
| | | | US | 2018321513 A1 | 08-11-2018 |
| | | | WO | 2017077357 A1 | 11-05-2017 |
| WO 2013171434 | A1 | 21-11-2013 | AU | 2013261571 A1 | 04-12-2014 |
| | | | AU | 2013261572 A1 | 27-11-2014 |
| | | | AU | 2017203931 A1 | 06-07-2017 |
| | | | BR | 112014028470 A2 | 25-07-2017 |
| | | | BR | 112014028473 A2 | 25-07-2017 |
| | | | CA | 2873596 A1 | 21-11-2013 |
| | | | CA | 2873597 A1 | 21-11-2013 |
| | | | CN | 104303096 A | 21-01-2015 |
| | | | CN | 104321687 A | 28-01-2015 |
| | | | EP | 2850484 A1 | 25-03-2015 |
| | | | EP | 2850485 A1 | 25-03-2015 |
| | | | EP | 3486712 A1 | 22-05-2019 |
| | | | EP | 4163707 A1 | 12-04-2023 |
| | | | JP | 6267192 B2 | 24-01-2018 |
| | | | JP | 6965220 B2 | 10-11-2021 |
| | | | JP | 7279112 B2 | 22-05-2023 |
| | | | JP | 2015520412 A | 16-07-2015 |
| | | | JP | 2015520413 A | 16-07-2015 |
| | | | JP | 2019049712 A | 28-03-2019 |
| | | | JP | 2021167968 A | 21-10-2021 |
| | | | KR | 20150009543 A | 26-01-2015 |
| | | | KR | 20150011349 A | 30-01-2015 |
| | | | NZ | 701889 A | 26-08-2016 |
| | | | RU | 2014148966 A | 27-06-2016 |
| | | | TW | 201400916 A | 01-01-2014 |
| | | | US | 2015098058 A1 | 09-04-2015 |
| | | | US | 2015103310 A1 | 16-04-2015 |
| | | | US | 2015234208 A1 | 20-08-2015 |
| | | | WO | 2013171434 A1 | 21-11-2013 |
| | | | WO | 2013171435 A1 | 21-11-2013 |
| EP 4102264 | A1 | 14-12-2022 | NONE | | |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 7157

This annex lists the patent family members relating to the patent documents cited in  the above-mentioned European search report.
The members are as contained in the European Patent Office EDP file on
The European Patent Office is in no way liable for these particulars which are merely given for the purpose of information.

20-05-2025

| Patent document cited in search report | Publication date | Patent family member(s) | Publication date |
|---|---|---|---|
| WO 2017077359 A1 | 11-05-2017 | BR 112018008638 A2 | 30-10-2018 |
| | | CA 3003972 A1 | 11-05-2017 |
| | | CN 108351535 A | 31-07-2018 |
| | | EP 3371647 A1 | 12-09-2018 |
| | | JP 2018533771 A | 15-11-2018 |
| | | US 2018321510 A1 | 08-11-2018 |
| | | WO 2017077359 A1 | 11-05-2017 |
| US 2021294126 A1 | 23-09-2021 | CN 112513722 A | 16-03-2021 |
| | | EP 3830638 A1 | 09-06-2021 |
| | | JP 7350837 B2 | 26-09-2023 |
| | | JP 2021531511 A | 18-11-2021 |
| | | KR 20210034592 A | 30-03-2021 |
| | | US 2021294126 A1 | 23-09-2021 |
| | | WO 2020021107 A1 | 30-01-2020 |
| CN 106431004 A | 22-02-2017 | NONE | |

EPO FORM P0459

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008024414 A
- WO 2013171434 A
- JP 2010210945 A
- JP 2010237639 A
- JP 2010140008 A
- WO 2012076714 A
- US 4689387 A
- US 4775733 A
- US 5059673 A
- US 5087758 A
- US 5191055 A
- WO 2013013929 A
- US 2022291740 A
- US 11822709 B
- US 2022269111 A
- FR 2943798

- US 2006017011 A
- US 5268781 A
- WO 2020104392 A
- JP 63141001 A
- JP 63087223 A
- US 5015523 A
- US 6503631 B
- EP 0404111 A
- US 5316791 A
- EP 0680492 A
- EP 0614957 A
- US 4211823 A
- WO 2011080472 A
- WO 2017077359 A
- WO 2010109154 A
- WO 2008107325 A
- WO 2022258793 A

**Non-patent literature cited in the description**

- **KITCHEL E**. The effects of blue light on ocular health. *Journal of Visual Impairment and Blindness*, 2000, vol. 94 (6)

- **GLAZER-HOCKSTEIN et al.** *Retina*, 2006, vol. 26 (1), 1-4
- Thin Film Processes II. Academic Press, 1978